# EUROPEAN PATENT APPLICATION

(11) **EP 4 592 738 A1**
(43) Date of publication of application: **30.07.2025**
(21) Application number: 25153663.7
(22) Date of filing: 23.01.2025
(51) Int. Cl.: G02B 27/01, G02C 5/04

(54) **FORCE-OFFSETTING MECHANISMS FOR INTERPUPILLARY DISTANCE ADJUSTMENTS IN ARTIFICIAL-REALITY DEVICES**

(30) Priority: 24.01.2024 US 202463624509 P; 17.01.2025 US 202519026730
(71) Applicant: Meta Platforms Technologies, LLC, Menlo Park, CA 94025 (US)
(72) Inventor: CAMPBELL, Ian, Menlo Park, 94025 (US); CAPUL, Marc, Menlo Park, 94025 (US); KAPUR, Ayush, Menlo Park, 94025 (US)
(74) Representative: Murgitroyd & Company

(57) **Abstract**

Artificial-reality devices may include left and right eyecups for respectively viewing left and right images. A flexible shroud membrane may be connected to the left and right eyecups. The artificial-reality devices may also include an interpupillary distance adjustment mechanism for adjusting a distance between the left and right eyecups and a force-offsetting mechanism configured to augment a force applied to adjust the distance between the left and right eyecups. Various other devices, systems, and methods are also disclosed.

## Description

### TECHNICAL FIELD

The present disclosure relates generally to artificial-reality devices with an adjustable interpupillary distance.

### BACKGROUND

Artificial-realty devices, such as virtual-reality devices, may present binocular images to a user to give an impression of viewing a three-dimensional scene or object. The images can be viewed through eyecups that hold right and left lenses, respectively. For improved quality of viewing, some artificial-reality devices include eyecups that can be adjusted inward and outward to substantially match or otherwise come close to the user's interpupillary distance (IPD). The eyecups can be secured in place at a variety of different IPD settings to accommodate users with different IPOs.

### SUMMARY

According to a first aspect, there is provided an artificial-reality device, comprising: a left eyecup for viewing a left image through the left eyecup; a right eyecup for viewing a right image through the right eyecup; a flexible shroud membrane connected to the left eyecup and the right eyecup; an interpupillary distance adjustment mechanism for adjusting a distance between the left eyecup and the right eyecup; and a force-offsetting mechanism configured to augment a force applied to adjust the distance between the left eyecup and the right eyecup.

The force-offsetting mechanism may comprise at least one cam mechanism. The at least one cam mechanism may comprise a spring-loaded roller positioned to interact with a cam surface as the distance between the left eyecup and the right eyecup is adjusted.

The at least one cam mechanism may comprise a first cam mechanism comprising a first spring-loaded roller positioned to interact with a first cam surface. The at least one cam mechanism may comprise a second cam mechanism comprising a second spring-loaded roller positioned to interact with a second cam surface.

The first cam surface may comprise a first surface of the left eyecup. The second cam surface may comprise a second surface of the right eyecup.

The force-offsetting mechanism may comprise at least one bistable spring mechanism positioned and configured to augment the force applied to adjust the distance between the left eyecup and the right eyecup.

The at least one bistable spring mechanism may be configured to be in a first stable state applying an inward force to the left eyecup and to the right eyecup when the distance between the left eyecup and the right eyecup approaches a minimum and in a second stable state applying an outward force to the left eyecup and to the right eyecup when the distance between the left eyecup and the right eyecup approaches a maximum.

The force-offsetting mechanism may comprise at least one left eyecup magnet coupled to the left eyecup; and at least one right eyecup magnet coupled to the right eyecup. The at least one left eyecup magnet and the at least one right eyecup magnet may be positioned and oriented to apply a magnetic force to augment the force applied to adjust the distance between the left eyecup and the right eyecup.

The at least one left eyecup magnet may comprise a first, outer left eyecup magnet positioned and oriented to apply a first magnetic force to augment a force applied to widen the distance between the left eyecup and the right eyecup. The at least one left eyecup magnet may comprise a second, inner left eyecup magnet positioned and oriented to apply a second magnetic force to augment a force applied to reduce the distance between the left eyecup and the right eyecup. The at least one right eyecup magnet may comprise a first, outer right eyecup magnet positioned and oriented to apply a third magnetic force to augment the force applied to widen the distance between the left eyecup and the right eyecup. The at least one right eyecup magnet may comprise a second, inner right eyecup magnet positioned and oriented to apply a fourth magnetic force to augment the force applied to reduce the distance between the left eyecup and the right eyecup.

The artificial-reality device may further comprise at least one frame magnet positioned on a frame supporting the left eyecup and the right eyecup. The at least one frame magnet may be positioned and oriented to interact with at least one of the left eyecup magnet or the right eyecup magnet to apply the magnetic force to augment the force applied to adjust the distance between the left eyecup and the right eyecup.

The force-offsetting mechanism may comprise at least one motor and at least one encoder. The motor may be configured to activate to augment the force applied to adjust the distance between the left eyecup and the right eyecup in response to the at least one encoder identifying a position and direction of movement of the left eyecup and right eyecup.

The force-offsetting mechanism may comprise at least one frictional force augmentation element positioned and configured to augment the force applied to adjust the distance between the left eyecup and the right eyecup.

The at least one frictional force augmentation element may comprise at least one first shaft coupled to the left eyecup at least one second shaft coupled to the right eyecup; a first friction element positioned and configured to engage with the first shaft; and a second friction element positioned and configured to engage with the second shaft.

Each of the first friction element and the second friction element may comprise a rubber pad or an O-ring.

According to a second aspect, there is provided an artificial-reality device, comprising: a head-mounted display (HMD) frame; eyecups supported by the HMD frame for viewing images through the eyecups, the eyecups being laterally movable relative to each other and relative to the HMD frame for adjusting an interpupillary distance (IPD) setting of the eyecups; a flexible shroud membrane mounted to and between the eyecups and the HMD frame, wherein the flexible shroud membrane applies a membrane force to the eyecups when the eyecups are in at least some IPD settings; and a force-offsetting mechanism configured to counteract the membrane force to facilitate adjustments of the IPD setting of the eyecups.

The force-offsetting mechanism may comprise, for each of the eyecups, at least one magnetic force augmentation element that applies a magnetic force to the eyecup as the eyecup approaches at least one of a maximum IPD setting or a minimum IPD setting.

The force-offsetting mechanism may comprise a cam force augmentation mechanism including a spring-loaded roller abutting a cam surface. The cam force augmentation mechanism may apply an inward force to the eyecups when the eyecups approach a minimum IPD setting and an outward force to the eyecups when the eyecups approach a maximum IPD setting.

The force-offsetting mechanism may comprise a bistable spring force augmentation mechanism including a bistable element that, in a first stable state when the eyecups approach a minimum IPD setting, applies an inward force to the eyecups and, in a second stable state when the eyecups approach a maximum IPD setting, applies an outward force to the eyecups.

The force-offsetting mechanism may comprise a motorized force augmentation mechanism including an electromagnetic device configured to apply an inward force to the eyecups when the eyecups approach a minimum IPD setting and an outward force to the eyecups when the eyecups approach a maximum IPD setting.

The force-offsetting mechanism may comprise frictional force augmentation elements including friction elements that apply a frictional force to the eyecups to maintain the eyecups in a lateral position by overcoming the membrane force.

The artificial-reality device may further comprise an encoder configured to detect a position of at least one of the eyecups.

### BRIEF DESCRIPTION OF DRAWINGS

The accompanying drawings illustrate a number of examples and is a part of the specification. Together with the following description, the drawings demonstrate and explain various principles of the present disclosure.
FIG. 1 is a plot of a membrane force acting on eyecups at various interpupillary distance (IPD) settings.
FIG. 2 is a plot of membrane force acting on eyecups at various IPD settings with a frictional force of a friction element.
FIG. 3 is a plot showing a net force felt by a user when adjusting an IPD setting when the membrane force and a frictional force of a friction element are added together.
FIG. 4 is a plot of membrane force acting on eyecups at various IPD settings with a counterbalance force.
FIG. 5 is a plot showing a net force felt by a user when adjusting an IPD setting due to a membrane force, a counterbalance force, and a frictional force.
FIGS. 6A and 6B are simplified views of a head-mounted display (HMD) with eyecups in minimum and maximum IPD positions, respectively, and magnetic force augmentation elements.
FIGS. 7A and 7B are simplified views of an HMD with eyecups in minimum and maximum IPD positions, respectively, and cam force augmentation mechanisms.
FIGS. 8A and 8B are simplified views of an HMD with eyecups in minimum and maximum IPD positions, respectively, and bistable spring force augmentation mechanisms.
FIGS. 9A and 9B are simplified views of an HMD with eyecups in minimum and maximum IPD positions, respectively, and a motorized force augmentation mechanism.
FIGS. 10A and 10B are simplified views of an HMD with eyecups in minimum and maximum IPD positions, respectively, and frictional force augmentation elements.
FIG. 11 is an illustration of an example artificial-reality system.
FIG. 12 is an illustration of an example artificial-reality system with a handheld device.
FIG. 13A is an illustration of example user interactions within an artificial-reality system.
FIG. 13B is an illustration of example user interactions within an artificial-reality system.
FIG. 14A is an illustration of example user interactions within an artificial-reality system.
FIG. 14B is an illustration of example user interactions within an artificial-reality system.
FIG. 15 is an illustration of an example wrist-wearable device of an artificial-reality system.
FIG. 16 is an illustration of an example wearable artificial-reality system.
FIG. 17 is an illustration of an example augmented-reality system.
FIG. 18A is an illustration of an example virtual-reality system.
FIG. 18B is an illustration of another perspective of the virtual-reality systems shown in FIG. 18A.
FIG. 19 is a block diagram showing system components of example artificial-and virtual-reality systems.

Throughout the drawings, identical reference characters and descriptions indicate similar, but not necessarily identical, elements. While the examples described herein are susceptible to various modifications and alternative forms, specific examples have been shown in the drawings and will be described in detail herein. However, the examples described herein are not intended to be limited to the particular forms disclosed. Rather, the present disclosure covers all modifications, equivalents, and alternatives falling within this disclosure.

### DETAILED DESCRIPTION

Eyecups of an artificial-reality device may be connected to and laterally surrounded by a flexible shroud membrane to cover underlying components. For example, the flexible shroud membrane may be formed of a material that includes a fabric, an elastomeric material (e.g., silicone, rubber, etc.), or the like. The flexible shroud membrane may improve aesthetics of the artificial-reality device, such as by covering underlying mechanisms and components, and may also protect underlying portions of the device from debris (e.g., dust, dirt, sweat, etc.). In some examples, the flexible shroud membrane may facilitate cleaning of the artificial-reality device. Due to the flexibility and/or elasticity of a material of the flexible shroud membranes, the flexible shroud membranes can impart a force on the eyecups, such as in opposition to forces applied to adjust an IPD setting. This force from the flexible shroud membranes can make IPD adjustments more difficult. In addition, the force from the flexible shroud membranes can result in a reduction of optical alignment, such as by applying a torsional force to the eyecups.

As further described below, the present disclosure is directed to a force-offsetting mechanism that can be used to assist a user in adjusting an IPD setting of eyecups in an artificial-reality device, such as a virtual-reality device. For example, the force-offsetting mechanism may be useful to counteract forces from a flexible shroud membrane surrounding the eyecups. In some examples, artificial-reality devices of the present disclosure may include a left eyecup for viewing a left image through the left eyecup (e.g., through at least one left lens of the left eyecup), a right eyecup for viewing a right image through the right eyecup (e.g., through at least one right lens of the right eyecup), and a flexible shroud membrane connected to the left eyecup and the right eyecup. An IPD adjustment mechanism may be configured for adjusting a distance between the left eyecup and the right eyecup. The flexible shroud membrane may impart a force that counteracts a force applied to adjust (e.g., manually and/or electromechanically adjust) the distance between the left eyecup and the right eyecup using the IPD adjustment mechanism, such as when the distance between the eyecups approaches a maximum and/or approaches a minimum. Accordingly, the artificial-reality devices of the present disclosure may also include a force-offsetting mechanism that is configured to augment the force (e.g., manual and/or electromechanical force) applied to adjust the distance between the left eyecup and the right eyecup.

The force-offsetting mechanisms of the present disclosure may facilitate IPD adjustments (e.g., manual and/or electromechanical IPD adjustments) of eyecups by reducing and/or normalizing a force applied to make the IPD adjustments. This force reduction and/or normalization may also improve a perception of quality, such as by resulting in IPD adjustments that feel more smooth, consistent, and/or controlled. Moreover, the force-offsetting mechanisms of the present disclosure may help maintain optical alignment of lenses within the eyecups by reducing and/or counteracting torsional forces that may be applied to the eyecups by the flexible shroud membranes. In examples that employ a motorized (e.g., electromechanical) IPD adjustment system, the force-offsetting mechanisms of the present disclosure may reduce the power employed by the motorized IPD adjustment system by providing mechanical assistance.

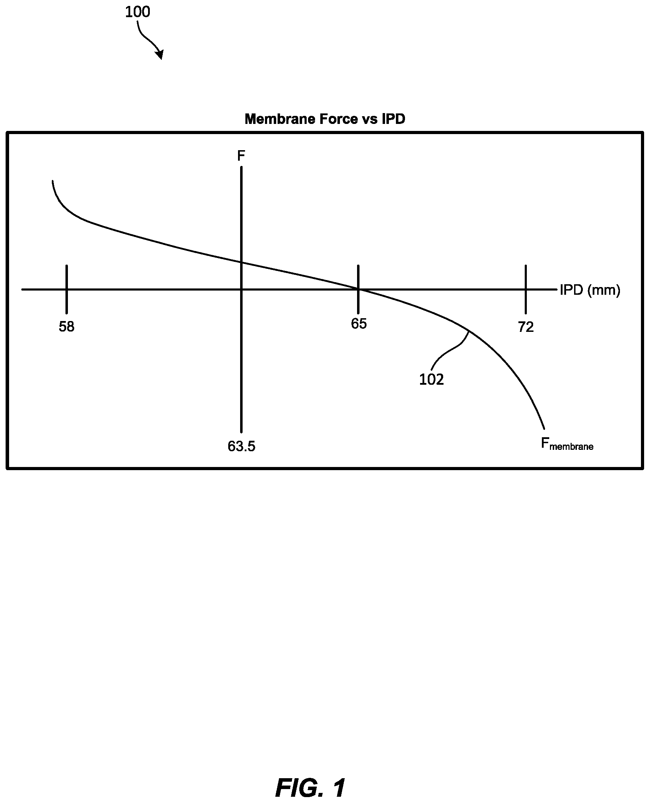

FIG. 1 is a plot 100 of a membrane force 102 acting on eyecups at various IPD settings. Plot 100 illustrates membrane force 102 that generally represents a lateral force imparted by a flexible shroud membrane on eyecups as the eyecups are in various IPD positions, such as from about 58 mm to about 72 mm between optical centers of lenses in the eyecups.

In this example, the zero-stress state of the membrane exists somewhere between the 63.5 mm nominal value and the 72 mm maximum value. By way of illustration and example, the zero-stress state may be at and IPD setting of about 65 mm. Membrane force 102 may be nonlinear and the maximum and minimum values of membrane force 102 may occur at the two extremes (e.g., maximum and minimum) of the IPD range as the flexible shroud membrane is stretched inward or outward to the greatest extent. For example, when the IPD position of the eyecups is low, outer portions of the flexible shroud membrane (e.g., laterally outside the eyecups) may be in tension. When the IPD position of the eyecups is high, inner portions of the flexible shroud membrane (e.g., between the eyecups) may be in tension.

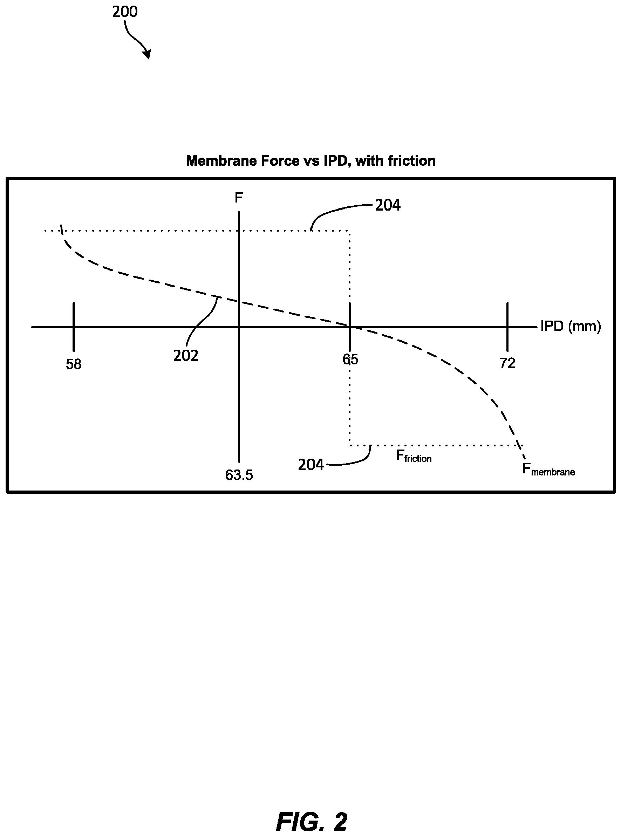

FIG. 2 is a plot 200 of membrane force 202 acting on eyecups at various IPD settings with a frictional force 204 of a friction element. Plot 200 generally illustrates membrane force 202 that represents a lateral force imparted by a flexible shroud membrane on eyecups as the eyecups are in various IPD positions. Membrane force 202 of FIG. 2 may be similar to or the same as membrane force 102 discussed above in relation to FIG. 1. Plot 200 also illustrates a frictional force 204, which may represent a static frictional force applied by one or more friction elements to the eyecups as the eyecups are positioned at different IPD settings. By way of example, a post or rod may be connected to one or both of the eyecups, and may be engaged with (e.g., pass through) one or more O-rings. As the eyecups are positioned at different IPD settings, frictional force 204 between the one or more O-rings and the post or rod may work against membrane force 202 from tension in the flexible shroud membrane.

In a hypothetical frictionless system, the eyecups would spring back to the zero-stress state of the membrane (e.g., at about 65 mm in the example of FIGS. 1 and 2). In order to prevent such spring-back, frictional force 204 resulting from the friction element may exceed the maximum force exerted by the flexible shroud membrane across the IPD range. This frictional force 204 may enable the eyecups to remain in place after moving the eyecups to a particular IPD setting, since frictional force 204 exceeds membrane force 202 from applying tension to the flexible shroud membrane.

Although the friction element has been described as one or more O-rings engaged with a post or rod, the present disclosure is not so limited. For example, the friction element may be or include a pad attached to one or both of the eyecups and abutting a surface (or vice versa), a portion of the eyecups abutting against a surface, a post or rod abutting against one or more surfaces, or the like.

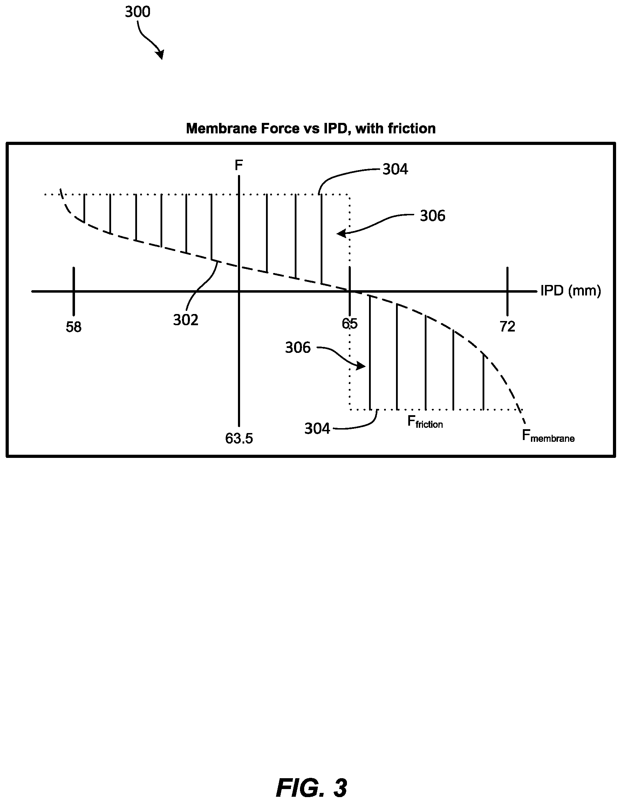

FIG. 3 is a plot 300 showing a net force 306 felt by a user when adjusting an IPD setting when a membrane force 302 and a frictional force 304 of a friction element are added together. Membrane force 302 applied by tension in the flexible shroud membrane to the eyecups may be similar to or the same as membrane force 102, 202 discussed above. Frictional force 304 may be similar to or the same as the frictional force 204 discussed above.

Because membrane force 302 acts in an opposing direction to frictional force 304, a difference between these forces is net force 306 required to be applied to the eyecups by a user or mechanism to adjust the IPD setting (e.g., to overcome frictional force 304 in the presence of membrane force 302). In this example, net force 306 required to adjust the IPD setting is low at the extremes of the IPD range but peaks in the middle of the IPD range and, therefore, the resulting net force 306 is non-uniform across the range of IPD settings.

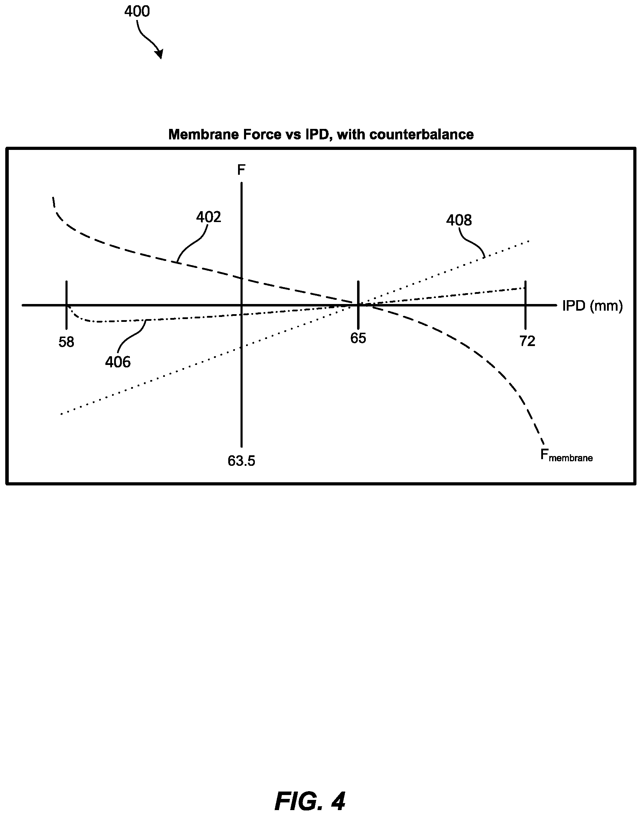

FIG. 4 is a plot 400 of membrane force 402 acting on eyecups at various IPD settings with a counterbalance force 408. Membrane force 402 applied by tension in the flexible shroud membrane to the eyecups may be similar to or the same as membrane force 102, 202, 302 discussed above.

To achieve a more uniform adjustment force across the range of IPD settings, a counterbalance element may be added to the system to apply a counterbalance force 408 that works against membrane force 402. In some examples, counterbalance force 408 may be substantially linear across the IPD range, as illustrated in FIG. 4. A resulting force 406 on the eyecups may be obtained by adding membrane force 402 and counterbalance force 408. With at least a portion of membrane force 402 offset by the counterbalance element, IPD adjustments can be achieved with less effort from the user, as illustrated by the resulting force 406.

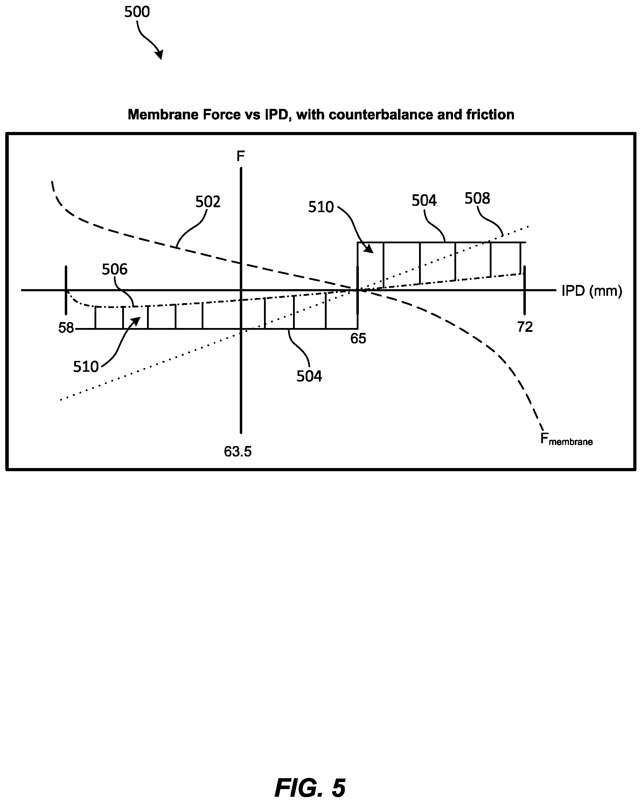

FIG. 5 is a plot 500 showing a net force felt by a user when adjusting an IPD setting due to a membrane force 502, a counterbalance force 508, and a frictional force 504. Membrane force 502 applied by tension in the flexible shroud membrane to the eyecups may be similar to or the same as membrane force 102, 202, 302, 402 discussed above. A resulting force 506 acting on the eyecups at various IPD settings may be obtained by adding membrane force 502 and counterbalance force 508.

In this example, a force-offsetting mechanism (e.g., a counterbalance element) may improve the ease and feel of IPD adjustment in a head-mounted display (HMD) device that has a flexible shroud membrane between and attached to the eyecups. For example, a magnitude of frictional force 504 required to keep the eyecups stationary at any given IPD across the range of IPD settings may be lower because of the force-offsetting mechanism, such as compared to the system described above with reference to FIG. 3. Additionally, although a force-offsetting mechanism with a fully minimized resulting force 506 would have a counterbalance force 508 that matches membrane force 502 exactly, even a simple linear counterbalance force 508 (e.g., as shown in the example of FIG. 5) can be effective in flattening and lowering the curve.

In consideration of membrane force 502, counterbalance force 508, and frictional force 504, a net force 510 required to move the eyecups between IPD settings may be lower and more uniform across the IPD range compared to, for example, net force 306 described above with reference to FIG. 3.

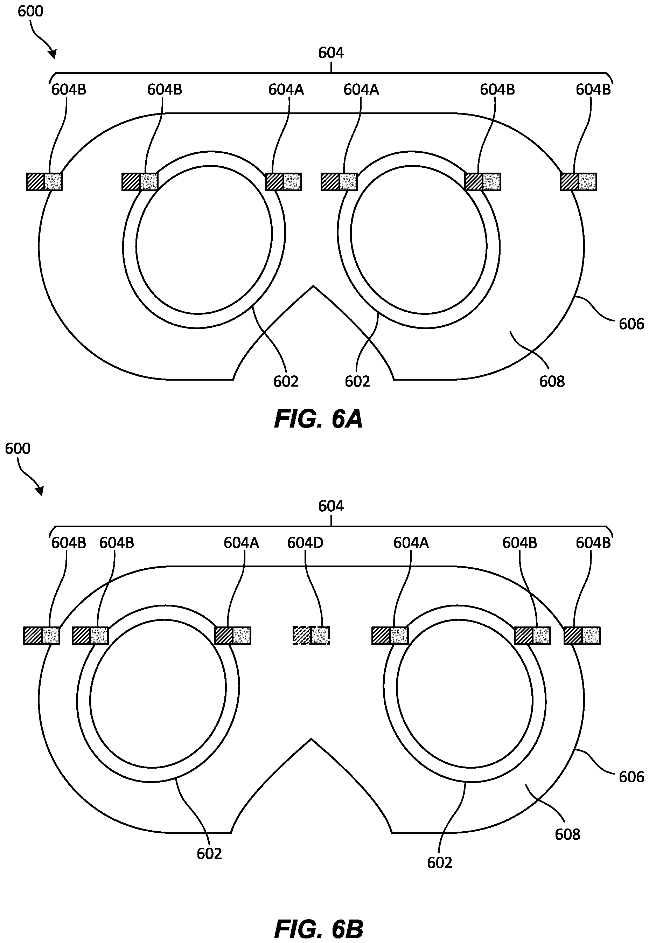

To properly offset the forces imposed by the membrane, a force-offsetting mechanism may bias the eyecup modules outward at a maximum IPD position and inward at a minimum IPD position. This can be accomplished in a variety of ways, some examples of which are shown in FIGS. 6A-10B and described below.

FIGS. 6A and 6B are simplified views of a head-mounted display (HMD) 600 with eyecups 602 in minimum (FIG. 6A) and maximum (FIG. 6B) IPD positions, respectively, and magnetic force augmentation elements 604. Magnetic force augmentation elements 604 represent an example of a force-offsetting mechanism or counterbalance element as described above.

Eyecups 602 may be mounted to an HMD frame 606 such that eyecups 602 are laterally movable relative to HMD frame 606 for IPD adjustments. Eyecups 602 may include a left eyecup 602 for viewing a left image through the left eyecup 602 and a right eyecup 602 for viewing a right image through the right eyecup 602, such as on one or more display screens (e.g., one or more near-eye display screens). A flexible shroud membrane 608 may be attached to eyecups 602 and to HMD frame 606.

Magnetic force augmentation elements 604 may include inner eyecup magnets 604A and outer eyecup magnets 604B mounted to and movable with eyecups 602. Magnetic force augmentation elements 604 may also include frame magnets 604C mounted to HMD frame 606.

As illustrated in FIG. 6A, as the two eyecups 602 approach a minimum IPD setting, outer portions of flexible shroud membrane 608 may be in tension, applying an outward force to eyecups 602. At the same time, inner eyecup magnets 604A may approach each other, applying an inward magnetic attraction force to eyecups 602. This inward magnetic attraction force from inner eyecup magnets 604A may counteract the outward force from flexible shroud membrane 608.

Similarly, as illustrated in FIG. 6B, as the two eyecups 602 approach a maximum IPD setting, inner portions of flexible shroud membrane 608 may be in tension, applying an inward force to eyecups 602. At the same time, outer eyecup magnets 604B may approach frame magnets 604C, applying an outward magnetic attraction force to eyecups 602. This outward magnetic attraction force between outer eyecup magnets 604B and frame magnets 604C may counteract the inward force from flexible shroud membrane 608.

Optionally, in some examples, one or more central magnets 604D (shown in dashed lines in FIG. 6B) may be secured to HMD frame 606. As eyecups 602 approach a minimum IPD, inner eyecup magnets 604A may be magnetically attracted inwardly to one or more central magnets 604D. For example, one or more central magnets 604D may be used in situations where inner eyecup magnets 604A are too distant from each other to experience a sufficient inward magnetic attraction toward each other.

In additional examples, one or more of frame magnets 604C and/or central magnets 604D may be omitted and replaced by a ferrous HMD frame element. In this case, inner eyecup magnets 604A and/or outer eyecup magnets 604B may experience a magnetic attraction force with the ferrous HMD frame element rather than with the omitted frame magnets 604C and/or central magnets 604D. In yet further examples, one or more of frame magnets 604C and central magnets 604D may be in place, but inner eyecup magnets 604A and/or outer eyecup magnets 604B may be omitted and replaced by a ferrous eyecup element that can be attracted to frame magnets 604C and/or central magnets 604D.

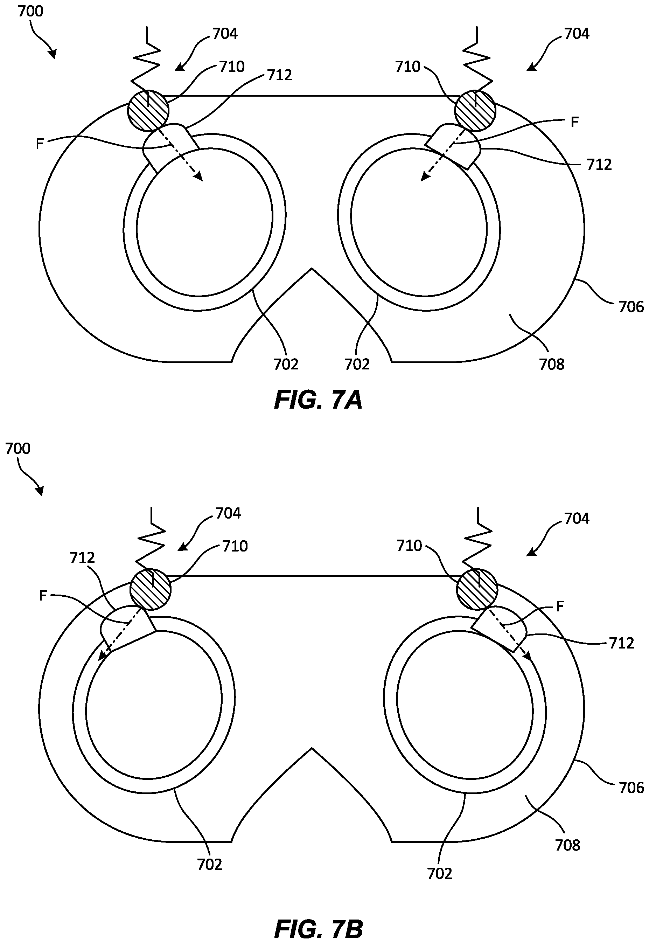

FIGS. 7A and 7B are simplified views of an HMD 700 with eyecups 702 in minimum (FIG. 7A) and maximum (FIG. 7B) IPD positions, respectively, and cam force augmentation mechanisms 704. Cam force augmentation mechanisms 704 represent an example of a force-offsetting mechanism or counterbalance element as described above.

Eyecups 702 may be mounted to an HMD frame 706 such that eyecups 702 are laterally movable relative to HMD frame 706 for IPD adjustments. A flexible shroud membrane 708 may be attached to eyecups 702 and to HMD frame 706.

In some examples, cam force augmentation mechanisms 704 may each include a spring-loaded roller 710 fixed to the chassis and a cam surface 712 attached to the eyecups. As illustrated in FIG. 7A, at a minimum IPD setting, the resulting force F from spring-loaded roller 710 onto cam surface 712 would push eyecups 702 inward, counteracting an outward force from tension in outer portions of flexible shroud membrane 708.

As illustrated in FIG. 7B, at a maximum IPD setting, the resulting force F from spring-loaded roller 710 onto cam surface 712 would push eyecups 702 outward, counteracting an inward force from tension in a central portion of flexible shroud membrane 708.

In additional examples, an inverse arrangement of the spring-loaded roller 710 and cam surface 712 could be included. In this example, spring-loaded roller 710 may be secured to eyecup 702 and cam surface 712 may be secured to (or a part of) HMD frame 706. In additional examples, a leaf spring may be used with or without a roller against a cam surface 710 either on HMD frame 706 or on eyecup 702.

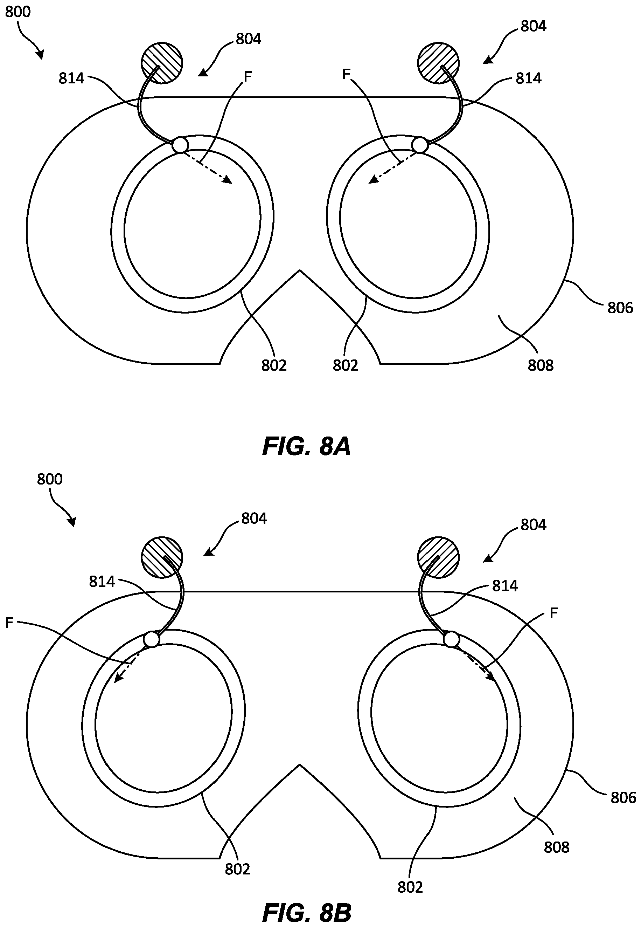

FIGS. 8A and 8B are simplified views of an HMD 800 with eyecups 802 in minimum (FIG. 8A) and maximum (FIG. 8B) IPD positions, respectively, and bistable spring force augmentation mechanisms 804. Bistable spring force augmentation mechanisms 804 represent an example of a force-offsetting mechanism or counterbalance element as described above.

Eyecups 802 may be mounted to an HMD frame 806 such that eyecups 802 are laterally movable relative to HMD frame 806 for IPD adjustments. A flexible shroud membrane 808 may be attached to eyecups 802 and to HMD frame 806.

Bistable spring force augmentation mechanisms 804 may each include a bistable element 814. In some examples, the bistable element 814 may include a flexible beam with one end attached (e.g., rotatably attached) to eyecup 802 and with an opposing end attached (e.g., rotatably attached) to HMD frame 806. At or approaching a minimum IPD, shown in FIG. 8A, the bistable element 814 may be in a first stable state in which a force F is applied in an inward direction. This inward force F may counteract a membrane force from tension in outer portions of flexible shroud membrane 808.

At or approaching a maximum IPD, as shown in FIG. 8B, bistable element 814 may be in a second stable state in which the force F is applied in an outward direction. This outward force F may counteract a membrane force from tension in a central portion of flexible shroud membrane 808.

As eyecups 802 are moved to or near a neutral position (e.g., between the states shown in FIGS. 8A and 8B), bistable element 814 may flip between the first stable state and the second stable state.

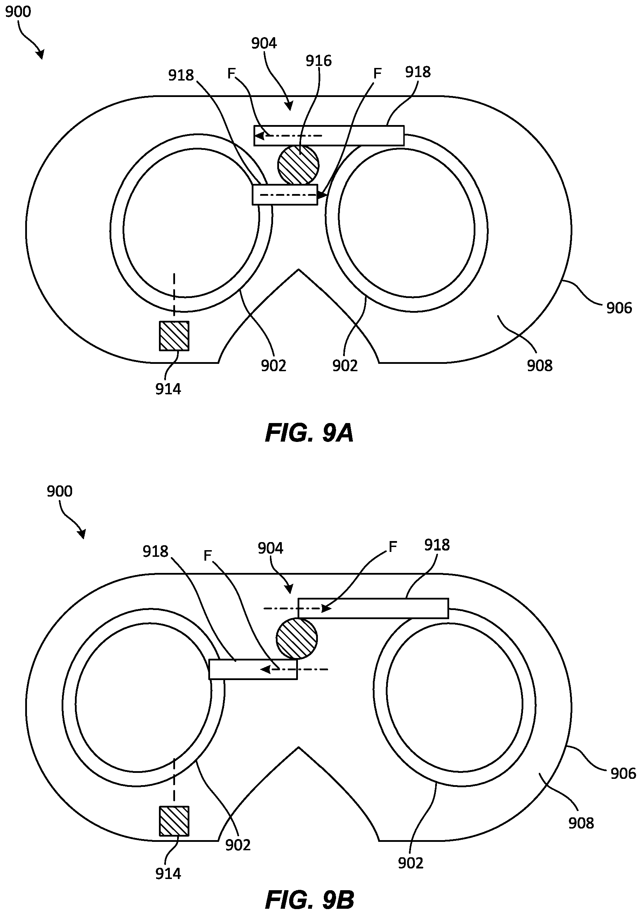

FIGS. 9A and 9B are simplified views of an HMD 900 with eyecups 902 in minimum (FIG. 9A) and maximum (FIG. 9B) IPD positions, respectively, and a motorized force augmentation mechanism 904. Motorized force augmentation mechanism 904 represents an example of a force-offsetting mechanism or counterbalance element as described above.

Eyecups 902 may be mounted to an HMD frame 906 such that eyecups 902 are laterally movable relative to HMD frame 906 for IPD adjustments. A flexible shroud membrane 908 may be attached to eyecups 902 and to HMD frame 906.

In this example, at least one encoder 914 may be included to determine both a position of eyecup(s) 902 and a direction of travel as an IPD adjustment is initiated by the user. Motorized force augmentation mechanism 904 may include a motor 916 for applying a force F to eyecups 902 in either an inward direction as illustrated in FIG. 9A or an outward direction as illustrated in FIG. 9B. Upon at least one encoder 914 sensing the position and direction of travel of eyecup(s) 902, motor 916 may be activated to apply the appropriate force F to counteract a membrane force from tension in flexible shroud membrane 908.

As shown in FIGS. 9A and 9B, motor 916 may be used to drive a rotatable pinion engaged with racks 918 connected to eyecups 902. In additional examples, motor 916 could be or include a rotatable screw shaft, a linear motor, or any other suitable electromagnetic device to apply the force F as described herein.

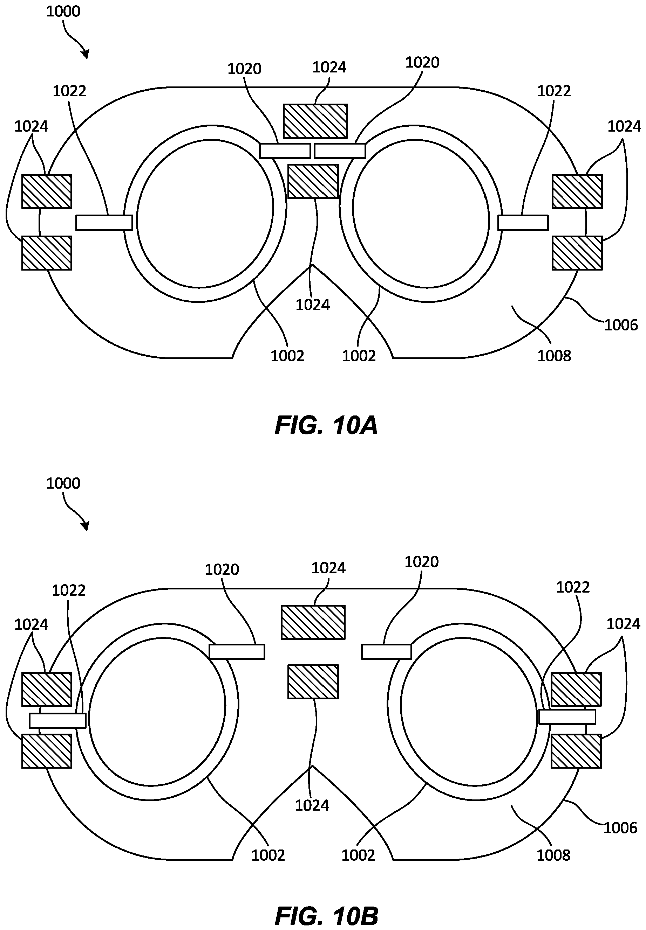

FIGS. 10A and 10B are simplified views of an HMD 1000 with eyecups 1002 in minimum (FIG. 10A) and maximum (FIG. 10B) IPD positions, respectively, and frictional force augmentation elements 1004. Frictional force augmentation elements 1004 represent an example of a force-offsetting mechanism or counterbalance element as described above.

Eyecups 1002 may be mounted to an HMD frame 1006 such that eyecups 1002 are laterally movable relative to HMD frame 1006 for IPD adjustments. A flexible shroud membrane 1008 may be attached to eyecups 1002 and to HMD frame 1006.

As illustrated in FIGS. 10A and 10B, in some examples, an internal shaft 1020 and an external shaft 1022 would be attached to each of eyecups 1002. Internal shafts 1020 and external shafts 1022 may be engaged with respective friction elements 1024, such as a friction pad (e.g., a rubber pad), an O-ring, or the like.

As shown in FIG. 10A, at a minimum IPD setting, a surface area of internal shafts 1020 may abut against and interact with the corresponding friction elements 1024. As eyecups 1002 are moved towards a neutral IPD (e.g., away from the minimum IPD setting), the surface area of internal shafts 1020 engaged with friction elements 1024 may decrease, resulting in a reduced friction force. This reduction in friction force may correspond to a reduction in the opposing membrane force from tension in flexible shroud membrane 1008.

As shown in FIG. 10B, at a maximum IPD setting, a surface area of the external shafts 1022 may interact with the corresponding friction elements 1024. As eyecups 1002 are moved towards the neutral IPD (e.g., away from the maximum IPD setting), the surface area of external shafts 1022 engaged with friction elements 1024 may decrease, resulting in a reduced friction force. This reduction in friction force may correspond to a reduction in the opposing membrane force from tension in flexible shroud membrane 1008.

The amount of friction force from frictional force augmentation elements 1004 may be tailored by adjusting the shapes and/or sizes of internal shafts 1020, external shafts 1022, and/or friction elements 1024. For example, internal shafts 1020, external shafts 1022, and/or friction elements 1024 may have a tapered shape such that an amount of change in the friction force can increase or decrease as internal shafts 1020 and/or external shafts 1022 are moved along the corresponding friction elements 1024. Accordingly, a resulting force/displacement curve for a given flexible shroud membrane 1008 may be adjusted by adjusting the shapes and/or sizes of internal shafts 1020, external shafts 1022, and/or friction elements 1024.

Accordingly, the present disclosure includes artificial-reality devices that may include eyecups with adjustable IPD settings and a flexible shroud membrane that may apply a membrane force to the eyecups during IPD adjustments. To counteract the membrane force and, therefore, improve IPD adjustments, a force-offsetting mechanism may be included. Various examples of the force-offsetting mechanism are described above. In these examples, the force-offsetting mechanism can be tailored to result in an improved feel during IPD adjustments, such as by lowering a force used to make the IPD adjustments and/or making more the force more constant.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, in some examples, AR may also be associated with applications, products, accessories, services, or some combination thereof, that are used to, for example, create content in an artificial reality and/or are otherwise used in (e.g., to perform activities in) an artificial reality.

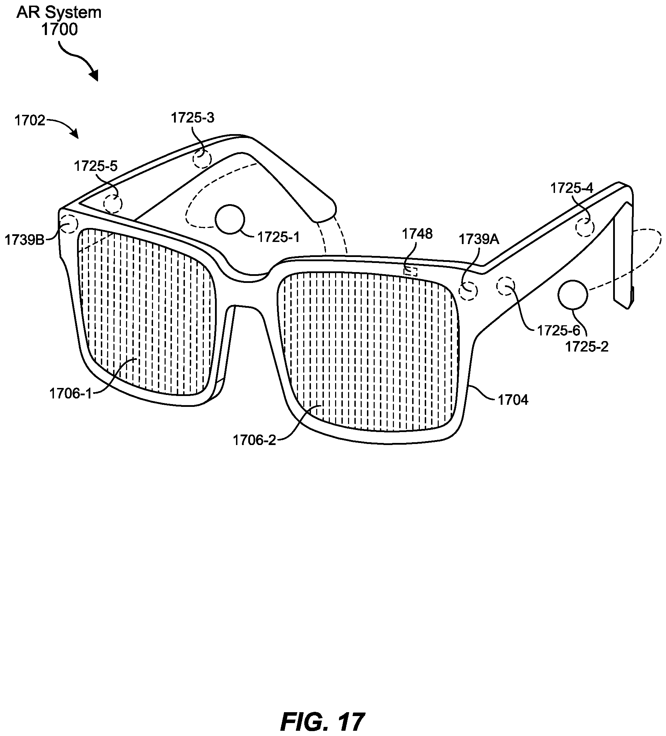

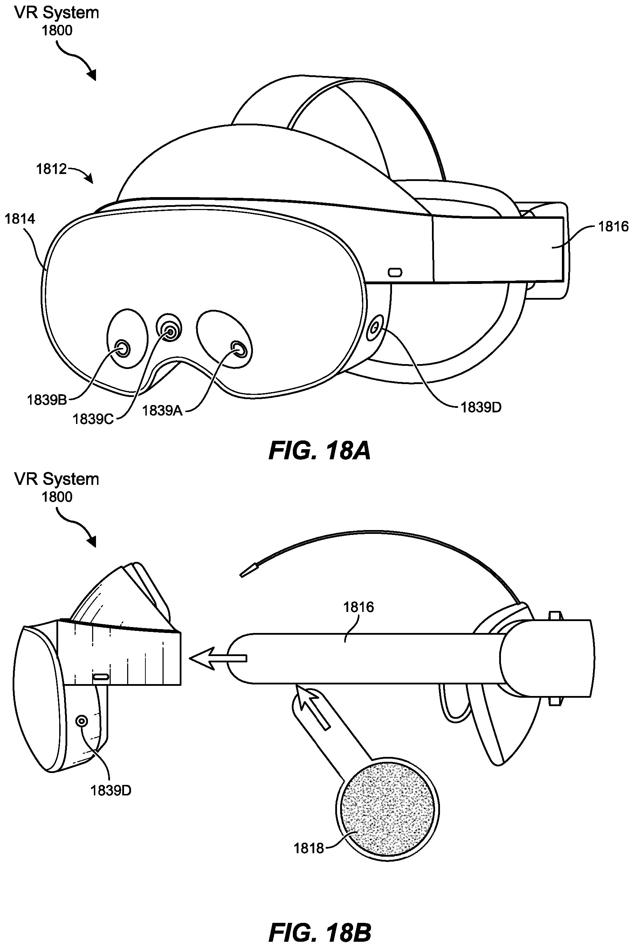

AR systems may be implemented in a variety of different form factors and configurations. Some AR systems may be designed to work without near-eye displays (NEDs). Other AR systems may include a NED that also provides visibility into the real world (such as, e.g., augmented-reality system 1700 in FIG. 17) or that visually immerses a user in an artificial reality (such as, e.g., virtual-reality system 1800 in FIGS. 18A and 18B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

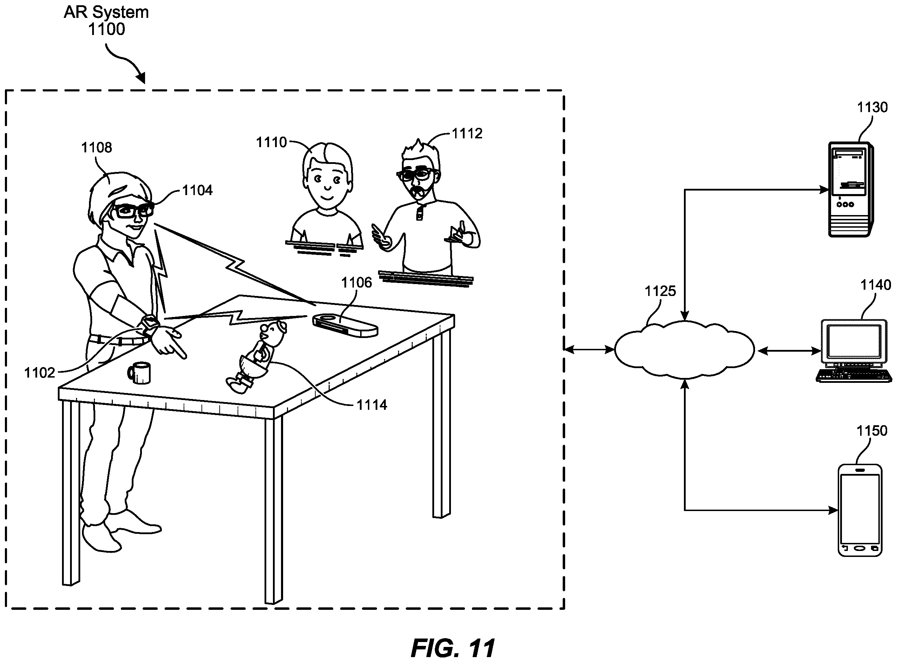

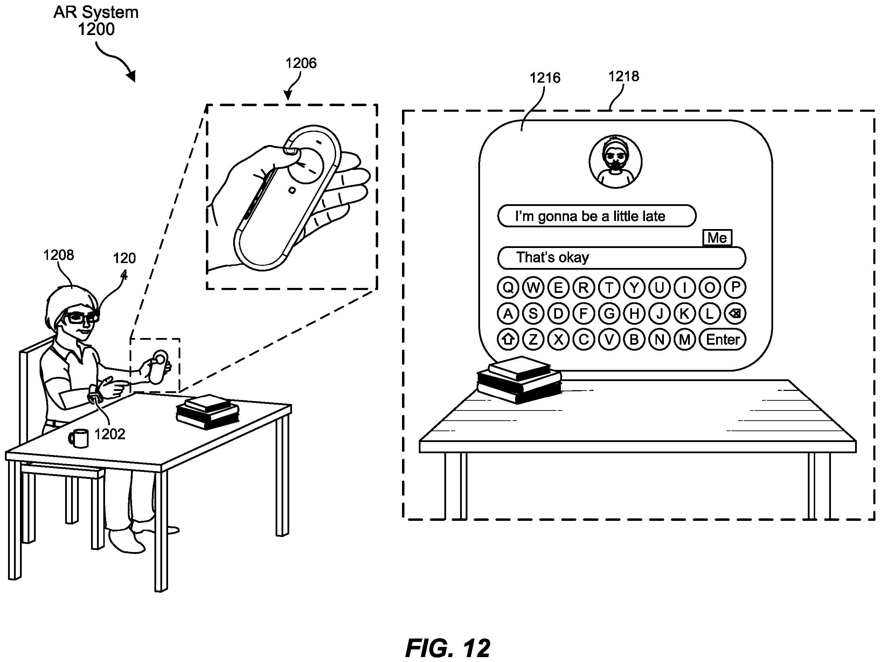

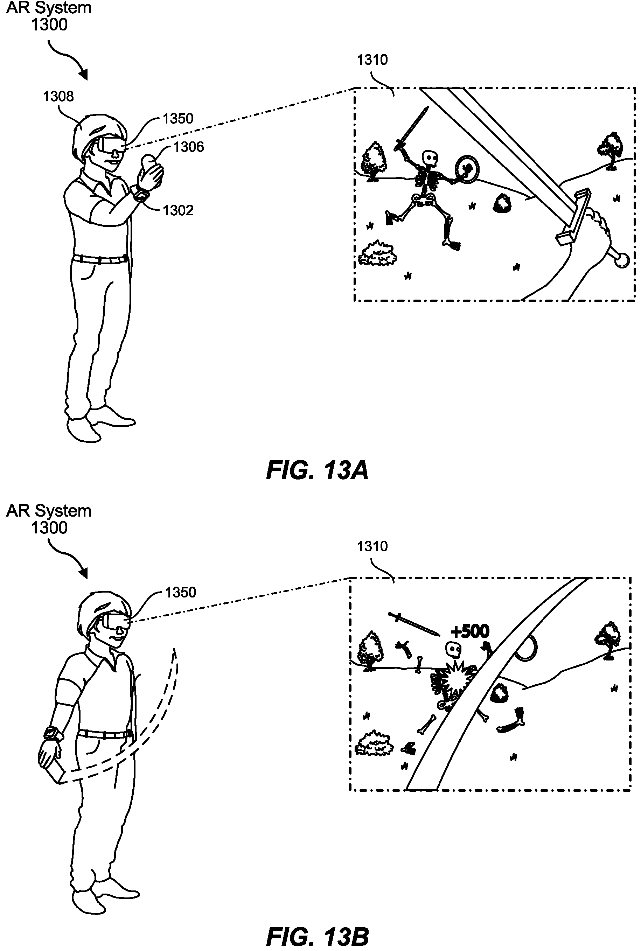

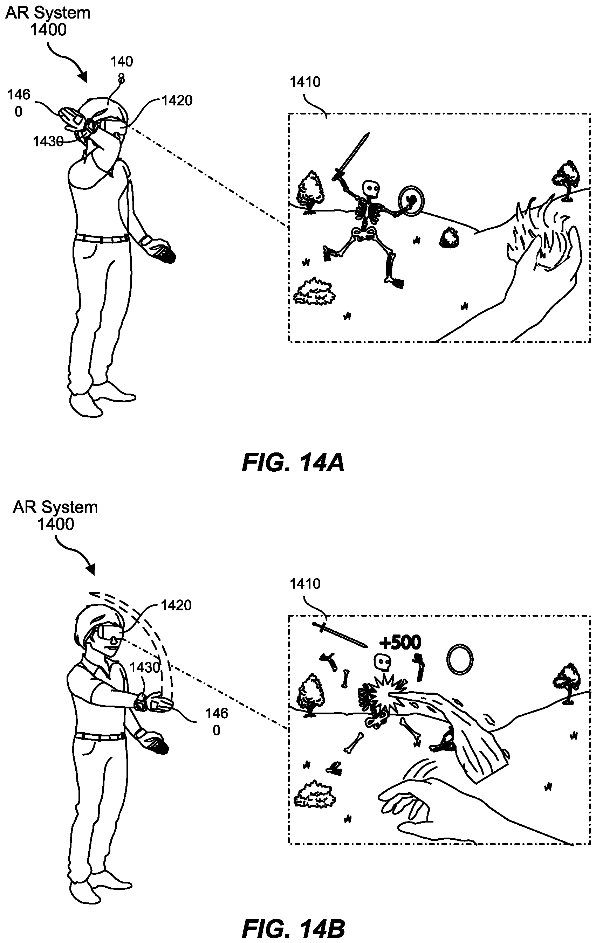

FIGS. 11-14B illustrate example artificial-reality (AR) systems. FIG. 11 shows a first AR system 1100 and first example user interactions using a wrist-wearable device 1102, a head-wearable device (e.g., AR glasses 1700), and/or a handheld intermediary processing device (HIPD) 1106. FIG. 12 shows a second AR system 1200 and second example user interactions using a wrist-wearable device 1202, AR glasses 1204, and/or an HIPD 1206. FIGS. 13A and 13B show a third AR system 1300 and third example user 1308 interactions using a wrist-wearable device 1302, a head-wearable device (e.g., VR headset 1350), and/or an HIPD 1306. FIGS. 14A and 14B show a fourth AR system 1400 and fourth example user 1408 interactions using a wrist-wearable device 1430, VR headset 1420, and/or a haptic device 1460 (e.g., wearable gloves).

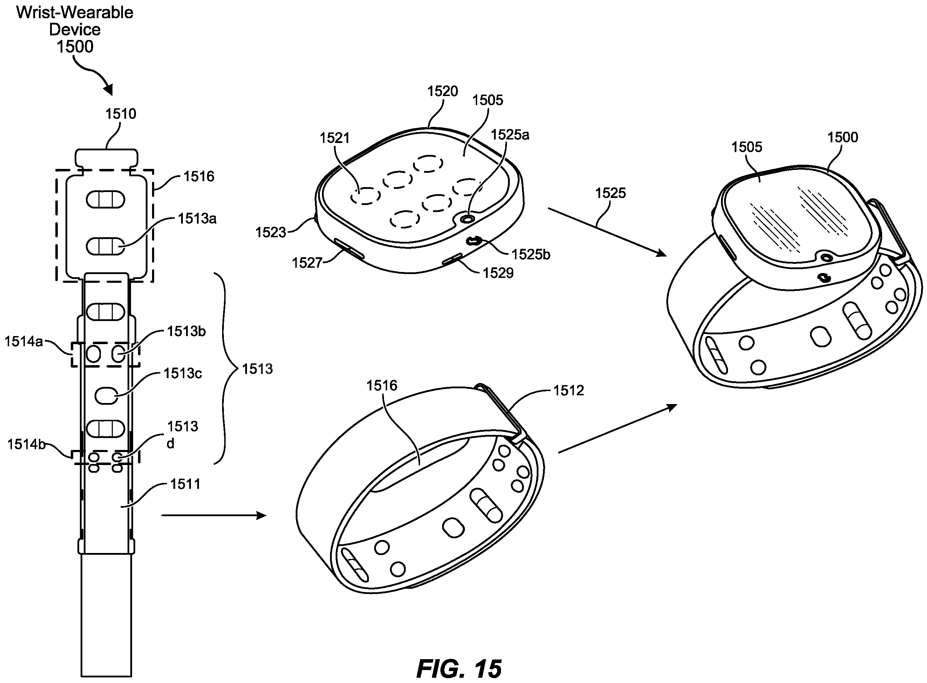

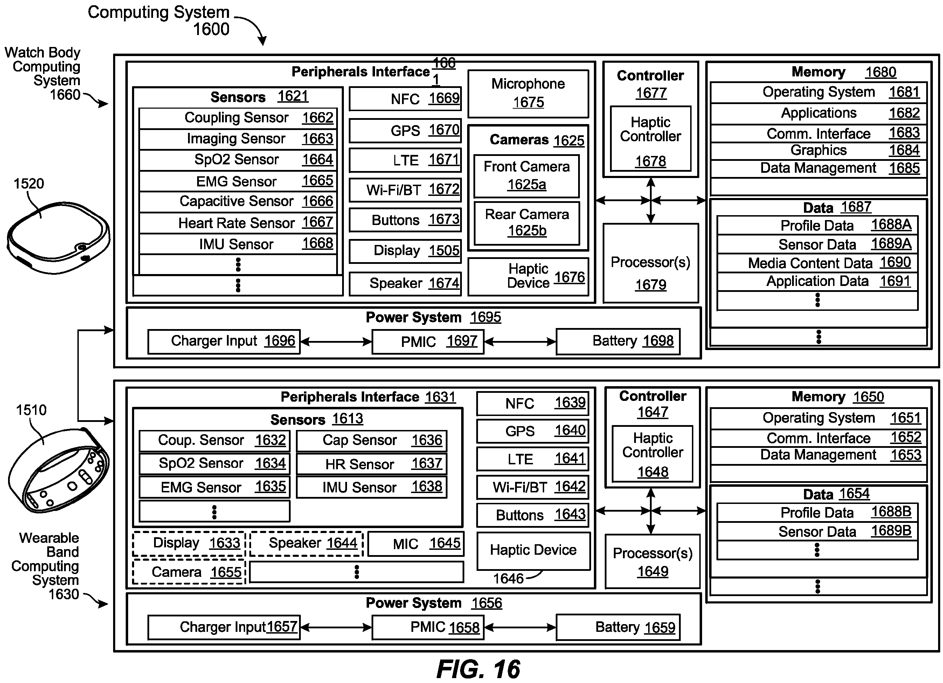

A wrist-wearable device 1500, which can be used for wrist-wearable device 1102, 1202, 1302, 1430, and one or more of its components, are described below in reference to FIGS. 15 and 16; head-wearable devices 1700 and 1800, which can respectively be used for AR glasses 1104, 1204 or VR headset 1350, 1420, and their one or more components are described below in reference to FIGS. 17-19.

Referring to FIG. 11, wrist-wearable device 1102, AR glasses 1104, and/or HIPD 1106 can communicatively couple via a network 1125 (e.g., cellular, near field, Wi-Fi, personal area network, wireless LAN, etc.). Additionally, wrist-wearable device 1102, AR glasses 1104, and/or HIPD 1106 can also communicatively couple with one or more servers 1130, computers 1140 (e.g., laptops, computers, etc.), mobile devices 1150 (e.g., smartphones, tablets, etc.), and/or other electronic devices via network 1125 (e.g., cellular, near field, Wi-Fi, personal area network, wireless LAN, etc.).

In FIG. 11, a user 1108 is shown wearing wrist-wearable device 1102 and AR glasses 1104 and having HIPD 1106 on their desk. The wrist-wearable device 1102, AR glasses 1104, and HIPD 1106 facilitate user interaction with an AR environment. In particular, as shown by first AR system 1100, wrist-wearable device 1102, AR glasses 1104, and/or HIPD 1106 cause presentation of one or more avatars 1110, digital representations of contacts 1112, and virtual objects 1114. As discussed below, user 1108 can interact with one or more avatars 1110, digital representations of contacts 1112, and virtual objects 1114 via wrist-wearable device 1102, AR glasses 1104, and/or HIPD 1106.

User 1108 can use any of wrist-wearable device 1102, AR glasses 1104, and/or HIPD 1106 to provide user inputs. For example, user 1108 can perform one or more hand gestures that are detected by wrist-wearable device 1102 (e.g., using one or more EMG sensors and/or IMUs, described below in reference to FIGS. 15 and 16) and/or AR glasses 1104 (e.g., using one or more image sensor or camera, described below in reference to FIGS. 17-19) to provide a user input. Alternatively, or additionally, user 1108 can provide a user input via one or more touch surfaces of wrist-wearable device 1102, AR glasses 1104, HIPD 1106, and/or voice commands captured by a microphone of wrist-wearable device 1102, AR glasses 1104, and/or HIPD 1106. In some examples, wrist-wearable device 1102, AR glasses 1104, and/or HIPD 1106 include a digital assistant to help user 1108 in providing a user input (e.g., completing a sequence of operations, suggesting different operations or commands, providing reminders, confirming a command, etc.). In some examples, user 1108 can provide a user input via one or more facial gestures and/or facial expressions. For example, cameras of wrist-wearable device 1102, AR glasses 1104, and/or HIPD 1106 can track eyes of user 1108 for navigating a user interface.

Wrist-wearable device 1102, AR glasses 1104, and/or HIPD 1106 can operate alone or in conjunction to allow user 1108 to interact with the AR environment. In some examples, HIPD 1106 is configured to operate as a central hub or control center for the wrist-wearable device 1102, AR glasses 1104, and/or another communicatively coupled device. For example, user 1108 can provide an input to interact with the AR environment at any of wrist-wearable device 1102, AR glasses 1104, and/or HIPD 1106, and HIPD 1106 can identify one or more back-end and front-end tasks to cause the performance of the requested interaction and distribute instructions to cause the performance of the one or more back-end and front-end tasks at wrist-wearable device 1102, AR glasses 1104, and/or HIPD 1106. In some examples, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). HIPD 1106 can perform the back-end tasks and provide wrist-wearable device 1102 and/or AR glasses 1104 operational data corresponding to the performed back-end tasks such that wrist-wearable device 1102 and/or AR glasses 1104 can perform the front-end tasks. In this way, HIPD 1106, which has more computational resources and greater thermal headroom than wrist-wearable device 1102 and/or AR glasses 1104, performs computationally intensive tasks and reduces the computer resource utilization and/or power usage of wrist-wearable device 1102 and/or AR glasses 1104.

In the example shown by first AR system 1100, HIPD 1106 identifies one or more back-end tasks and front-end tasks associated with a user request to initiate an AR video call with one or more other users (represented by avatar 1110 and the digital representation of contact 1112) and distributes instructions to cause the performance of the one or more back-end tasks and front-end tasks. In particular, HIPD 1106 performs back-end tasks for processing and/or rendering image data (and other data) associated with the AR video call and provides operational data associated with the performed back-end tasks to AR glasses 1104 such that the AR glasses 1104 perform front-end tasks for presenting the AR video call (e.g., presenting avatar 1110 and digital representation of contact 1112).

In some examples, HIPD 1106 can operate as a focal or anchor point for causing the presentation of information. This allows user 1108 to be generally aware of where information is presented. For example, as shown in first AR system 1100, avatar 1110 and the digital representation of contact 1112 are presented above HIPD 1106. In particular, HIPD 1106 and AR glasses 1104 operate in conjunction to determine a location for presenting avatar 1110 and the digital representation of contact 1112. In some examples, information can be presented a predetermined distance from HIPD 1106 (e.g., within 5 meters). For example, as shown in first AR system 1100, virtual object 1114 is presented on the desk some distance from HIPD 1106. Similar to the above example, HIPD 1106 and AR glasses 1104 can operate in conjunction to determine a location for presenting virtual object 1114. Alternatively, in some examples, presentation of information is not bound by HIPD 1106. More specifically, avatar 1110, digital representation of contact 1112, and virtual object 1114 do not have to be presented within a predetermined distance of HIPD 1106.

User inputs provided at wrist-wearable device 1102, AR glasses 1104, and/or HIPD 1106 are coordinated such that the user can use any device to initiate, continue, and/or complete an operation. For example, user 1108 can provide a user input to AR glasses 1104 to cause AR glasses 1104 to present virtual object 1114 and, while virtual object 1114 is presented by AR glasses 1104, user 1108 can provide one or more hand gestures via wrist-wearable device 1102 to interact and/or manipulate virtual object 1114.

FIG. 12 shows a user 1208 wearing a wrist-wearable device 1202 and AR glasses 1204, and holding an HIPD 1206. In second AR system 1200, the wrist-wearable device 1202, AR glasses 1204, and/or HIPD 1206 are used to receive and/or provide one or more messages to a contact of user 1208. In particular, wrist-wearable device 1202, AR glasses 1204, and/or HIPD 1206 detect and coordinate one or more user inputs to initiate a messaging application and prepare a response to a received message via the messaging application.

In some examples, user 1208 initiates, via a user input, an application on wrist-wearable device 1202, AR glasses 1204, and/or HIPD 1206 that causes the application to initiate on at least one device. For example, in second AR system 1200, user 1208 performs a hand gesture associated with a command for initiating a messaging application (represented by messaging user interface 1216), wrist-wearable device 1202 detects the hand gesture and, based on a determination that user 1208 is wearing AR glasses 1204, causes AR glasses 1204 to present a messaging user interface 1216 of the messaging application. AR glasses 1204 can present messaging user interface 1216 to user 1208 via its display (e.g., as shown by a field of view 1218 of user 1208). In some examples, the application is initiated and executed on the device (e.g., wrist-wearable device 1202, AR glasses 1204, and/or HIPD 1206) that detects the user input to initiate the application, and the device provides another device operational data to cause the presentation of the messaging application. For example, wrist-wearable device 1202 can detect the user input to initiate a messaging application, initiate and run the messaging application, and provide operational data to AR glasses 1204 and/or HIPD 1206 to cause presentation of the messaging application. Alternatively, the application can be initiated and executed at a device other than the device that detected the user input. For example, wrist-wearable device 1202 can detect the hand gesture associated with initiating the messaging application and cause HIPD 1206 to run the messaging application and coordinate the presentation of the messaging application.

Further, user 1208 can provide a user input provided at wrist-wearable device 1202, AR glasses 1204, and/or HIPD 1206 to continue and/or complete an operation initiated at another device. For example, after initiating the messaging application via wrist-wearable device 1202 and while AR glasses 1204 present messaging user interface 1216, user 1208 can provide an input at HIPD 1206 to prepare a response (e.g., shown by the swipe gesture performed on HIPD 1206). Gestures performed by user 1208 on HIPD 1206 can be provided and/or displayed on another device. For example, a swipe gestured performed on HIPD 1206 is displayed on a virtual keyboard of messaging user interface 1216 displayed by AR glasses 1204.

In some examples, wrist-wearable device 1202, AR glasses 1204, HIPD 1206, and/or any other communicatively coupled device can present one or more notifications to user 1208. The notification can be an indication of a new message, an incoming call, an application update, a status update, etc. User 1208 can select the notification via wrist-wearable device 1202, AR glasses 1204, and/or HIPD 1206 and can cause presentation of an application or operation associated with the notification on at least one device. For example, user 1208 can receive a notification that a message was received at wrist-wearable device 1202, AR glasses 1204, HIPD 1206, and/or any other communicatively coupled device and can then provide a user input at wrist-wearable device 1202, AR glasses 1204, and/or HIPD 1206 to review the notification, and the device detecting the user input can cause an application associated with the notification to be initiated and/or presented at wrist-wearable device 1202, AR glasses 1204, and/or HIPD 1206.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 1204 can present to user 1208 game application data, and HIPD 1206 can be used as a controller to provide inputs to the game. Similarly, user 1208 can use wrist-wearable device 1202 to initiate a camera of AR glasses 1204, and user 1208 can use wrist-wearable device 1202, AR glasses 1204, and/or HIPD 1206 to manipulate the image capture (e.g., zoom in or out, apply filters, etc.) and capture image data.

Users may interact with the devices disclosed herein in a variety of ways. For example, as shown in FIGS. 13A and 13B, a user 1308 may interact with an AR system 1300 by donning a VR headset 1350 while holding HIPD 1306 and wearing wrist-wearable device 1302. In this example, AR system 1300 may enable a user to interact with a game 1310 by swiping their arm. One or more of VR headset 1350, HIPD 1306, and wrist-wearable device 1302 may detect this gesture and, in response, may display a sword strike in game 1310. Similarly, in FIGS. 14A and 14B, a user 1408 may interact with an AR system 1400 by donning a VR headset 1420 while wearing haptic device 1460 and wrist-wearable device 1430. In this example, AR system 1400 may enable a user to interact with a game 1410 by swiping their arm. One or more of VR headset 1420, haptic device 1460, and wrist-wearable device 1430 may detect this gesture and, in response, may display a spell being cast in game 1310.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some examples discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. Examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by examples described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various examples described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configured to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars, (vii) clocks, and (viii) communication interface modules for enabling wired and/or wireless connections between different respective electronic devices (e.g., IEEE 1702.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some examples, a communication interface can refer to a software layer that enables different software programs to communicate with each other (e.g., application programming interfaces (APIs), protocols like HTTP and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 15 and 16 illustrate an example wrist-wearable device 1500 and an example computer system 1600. Wrist-wearable device 1500 is an instance of wearable device 1102 described in FIG. 11 herein, such that the wearable device 1102 should be understood to have the features of the wrist-wearable device 1500 and vice versa. FIG. 16 illustrates components of the wrist-wearable device 1500, which can be used individually or in combination, including combinations that include other electronic devices and/or electronic components.

FIG. 15 shows a wearable band 1510 and a watch body 1520 (or capsule) being coupled, as discussed below, to form wrist-wearable device 1500. Wrist-wearable device 1500 can perform various functions and/or operations associated with navigating through user interfaces and selectively opening applications as well as the functions and/or operations described above with reference to FIGS. 11-14B.

As will be described in more detail below, operations executed by wrist-wearable device 1500 can include (i) presenting content to a user (e.g., displaying visual content via a display 1505), (ii) detecting (e.g., sensing) user input (e.g., sensing a touch on peripheral button 1523 and/or at a touch screen of the display 1505, a hand gesture detected by sensors (e.g., biopotential sensors)), (iii) sensing biometric data (e.g., neuromuscular signals, heart rate, temperature, sleep, etc.) via one or more sensors 1513, messaging (e.g., text, speech, video, etc.); image capture via one or more imaging devices or cameras 1525, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 1520, independently in wearable band 1510, and/or via an electronic communication between watch body 1520 and wearable band 1510. In some examples, functions can be executed on wrist-wearable device 1500 while an AR environment is being presented (e.g., via one of AR systems 1100 to 1400). The wearable devices described herein can also be used with other types of AR environments.

Wearable band 1510 can be configured to be worn by a user such that an inner surface of a wearable structure 1511 of wearable band 1510 is in contact with the user's skin. In this example, when worn by a user, sensors 1513 may contact the user's skin. In some examples, one or more of sensors 1513 can sense biometric data such as a user's heart rate, a saturated oxygen level, temperature, sweat level, neuromuscular signals, or a combination thereof. One or more of sensors 1513 can also sense data about a user's environment including a user's motion, altitude, location, orientation, gait, acceleration, position, or a combination thereof. In some example, one or more of sensors 1513 can be configured to track a position and/or motion of wearable band 1510. One or more of sensors 1513 can include any of the sensors defined above and/or discussed below with respect to FIG. 15.

One or more of sensors 1513 can be distributed on an inside and/or an outside surface of wearable band 1510. In some examples, one or more of sensors 1513 are uniformly spaced along wearable band 1510. Alternatively, in some examples, one or more of sensors 1513 are positioned at distinct points along wearable band 1510. As shown in FIG. 15, one or more of sensors 1513 can be the same or distinct. For example, one or more of sensors 1513 can be shaped as a pill (e.g., sensor 1513a), an oval, a circle a square, an oblong (e.g., sensor 1513c) and/or any other shape that maintains contact with the user's skin (e.g., such that neuromuscular signal and/or other biometric data can be accurately measured at the user's skin). In some examples, one or more sensors of 1513 are aligned to form pairs of sensors (e.g., for sensing neuromuscular signals based on differential sensing within each respective sensor). For example, sensor 1513b may be aligned with an adjacent sensor to form sensor pair 1514a and sensor 1513d may be aligned with an adjacent sensor to form sensor pair 1514b. In some examples, wearable band 1510 does not have a sensor pair. Alternatively, in some examples, wearable band 1510 has a predetermined number of sensor pairs (one pair of sensors, three pairs of sensors, four pairs of sensors, six pairs of sensors, sixteen pairs of sensors, etc.).

Wearable band 1510 can include any suitable number of sensors 1513. In some examples, the number and arrangement of sensors 1513 depends on the particular application for which wearable band 1510 is used. For instance, wearable band 1510 can be configured as an armband, wristband, or chest-band that include a plurality of sensors 1513 with different number of sensors 1513, a variety of types of individual sensors with the plurality of sensors 1513, and different arrangements for each use case, such as medical use cases as compared to gaming or general day-to-day use cases.

In accordance with some examples, wearable band 1510 further includes an electrical ground electrode and a shielding electrode. The electrical ground and shielding electrodes, like the sensors 1513, can be distributed on the inside surface of the wearable band 1510 such that they contact a portion of the user's skin. For example, the electrical ground and shielding electrodes can be at an inside surface of a coupling mechanism 1516 or an inside surface of a wearable structure 1511. The electrical ground and shielding electrodes can be formed and/or use the same components as sensors 1513. In some examples, wearable band 1510 includes more than one electrical ground electrode and more than one shielding electrode.

Sensors 1513 can be formed as part of wearable structure 1511 of wearable band 1510. In some examples, sensors 1513 are flush or substantially flush with wearable structure 1511 such that they do not extend beyond the surface of wearable structure 1511. While flush with wearable structure 1511, sensors 1513 are still configured to contact the user's skin (e.g., via a skin-contacting surface). Alternatively, in some examples, sensors 1513 extend beyond wearable structure 1511 a predetermined distance (e.g., 0.1 - 2 mm) to make contact and depress into the user's skin. In some example, sensors 1513 are coupled to an actuator (not shown) configured to adjust an extension height (e.g., a distance from the surface of wearable structure 1511) of sensors 1513 such that sensors 1513 make contact and depress into the user's skin. In some examples, the actuators adjust the extension height between 0.01 mm - 1.2 mm. This may allow a the user to customize the positioning of sensors 1513 to improve the overall comfort of the wearable band 1510 when worn while still allowing sensors 1513 to contact the user's skin. In some examples, sensors 1513 are indistinguishable from wearable structure 1511 when worn by the user.

Wearable structure 1511 can be formed of an elastic material, elastomers, etc., configured to be stretched and fitted to be worn by the user. In some examples, wearable structure 1511 is a textile or woven fabric. As described above, sensors 1513 can be formed as part of a wearable structure 1511. For example, sensors 1513 can be molded into the wearable structure 1511, be integrated into a woven fabric (e.g., sensors 1513 can be sewn into the fabric and mimic the pliability of fabric and can and/or be constructed from a series woven strands of fabric).

Wearable structure 1511 can include flexible electronic connectors that interconnect sensors 1513, the electronic circuitry, and/or other electronic components (described below in reference to FIG. 16) that are enclosed in wearable band 1510. In some examples, the flexible electronic connectors are configured to interconnect sensors 1513, the electronic circuitry, and/or other electronic components of wearable band 1510 with respective sensors and/or other electronic components of another electronic device (e.g., watch body 1520). The flexible electronic connectors are configured to move with wearable structure 1511 such that the user adjustment to wearable structure 1511 (e.g., resizing, pulling, folding, etc.) does not stress or strain the electrical coupling of components of wearable band 1510.

As described above, wearable band 1510 is configured to be worn by a user. In particular, wearable band 1510 can be shaped or otherwise manipulated to be worn by a user. For example, wearable band 1510 can be shaped to have a substantially circular shape such that it can be configured to be worn on the user's lower arm or wrist. Alternatively, wearable band 1510 can be shaped to be worn on another body part of the user, such as the user's upper arm (e.g., around a bicep), forearm, chest, legs, etc. Wearable band 1510 can include a retaining mechanism 1512 (e.g., a buckle, a hook and loop fastener, etc.) for securing wearable band 1510 to the user's wrist or other body part. While wearable band 1510 is worn by the user, sensors 1513 sense data (referred to as sensor data) from the user's skin. In some examples, sensors 1513 of wearable band 1510 obtain (e.g., sense and record) neuromuscular signals.

The sensed data (e.g., sensed neuromuscular signals) can be used to detect and/or determine the user's intention to perform certain motor actions. In some examples, sensors 1513 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 1505 of wrist-wearable device 1500 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 1513 can be used to provide a user with an enhanced interaction with a physical object (e.g., devices communicatively coupled with wearable band 1510) and/or a virtual object in an artificial-reality application generated by an artificial-reality system (e.g., user interface objects presented on the display 1505, or another computing device (e.g., a smartphone)).

In some examples, wearable band 1510 includes one or more haptic devices 1646 (e.g., a vibratory haptic actuator) that are configured to provide haptic feedback (e.g., a cutaneous and/or kinesthetic sensation, etc.) to the user's skin. Sensors 1513 and/or haptic devices 1646 (shown in FIG. 16) can be configured to operate in conjunction with multiple applications including, without limitation, health monitoring, social media, games, and artificial reality (e.g., the applications associated with artificial reality).

Wearable band 1510 can also include coupling mechanism 1516 for detachably coupling a capsule (e.g., a computing unit) or watch body 1520 (via a coupling surface of the watch body 1520) to wearable band 1510. For example, a cradle or a shape of coupling mechanism 1516 can correspond to shape of watch body 1520 of wrist-wearable device 1500. In particular, coupling mechanism 1516 can be configured to receive a coupling surface proximate to the bottom side of watch body 1520 (e.g., a side opposite to a front side of watch body 1520 where display 1505 is located), such that a user can push watch body 1520 downward into coupling mechanism 1516 to attach watch body 1520 to coupling mechanism 1516. In some examples, coupling mechanism 1516 can be configured to receive a top side of the watch body 1520 (e.g., a side proximate to the front side of watch body 1520 where display 1505 is located) that is pushed upward into the cradle, as opposed to being pushed downward into coupling mechanism 1516. In some examples, coupling mechanism 1516 is an integrated component of wearable band 1510 such that wearable band 1510 and coupling mechanism 1516 are a single unitary structure. In some examples, coupling mechanism 1516 is a type of frame or shell that allows watch body 1520 coupling surface to be retained within or on wearable band 1510 coupling mechanism 1516 (e.g., a cradle, a tracker band, a support base, a clasp, etc.).

Coupling mechanism 1516 can allow for watch body 1520 to be detachably coupled to the wearable band 1510 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 1520 to wearable band 1510 and to decouple the watch body 1520 from the wearable band 1510. For example, a user can twist, slide, turn, push, pull, or rotate watch body 1520 relative to wearable band 1510, or a combination thereof, to attach watch body 1520 to wearable band 1510 and to detach watch body 1520 from wearable band 1510. Alternatively, as discussed below, in some examples, the watch body 1520 can be decoupled from the wearable band 1510 by actuation of a release mechanism 1529.

Wearable band 1510 can be coupled with watch body 1520 to increase the functionality of wearable band 1510 (e.g., converting wearable band 1510 into wrist-wearable device 1500, adding an additional computing unit and/or battery to increase computational resources and/or a battery life of wearable band 1510, adding additional sensors to improve sensed data, etc.). As described above, wearable band 1510 and coupling mechanism 1516 are configured to operate independently (e.g., execute functions independently) from watch body 1520. For example, coupling mechanism 1516 can include one or more sensors 1513 that contact a user's skin when wearable band 1510 is worn by the user, with or without watch body 1520 and can provide sensor data for determining control commands.

A user can detach watch body 1520 from wearable band 1510 to reduce the encumbrance of wrist-wearable device 1500 to the user. For examples in which watch body 1520 is removable, watch body 1520 can be referred to as a removable structure, such that in these examples wrist-wearable device 1500 includes a wearable portion (e.g., wearable band 1510) and a removable structure (e.g., watch body 1520).

Turning to watch body 1520, in some examples watch body 1520 can have a substantially rectangular or circular shape. Watch body 1520 is configured to be worn by the user on their wrist or on another body part. More specifically, watch body 1520 is sized to be easily carried by the user, attached on a portion of the user's clothing, and/or coupled to wearable band 1510 (forming the wrist-wearable device 1500). As described above, watch body 1520 can have a shape corresponding to coupling mechanism 1516 of wearable band 1510. In some examples, watch body 1520 includes a single release mechanism 1529 or multiple release mechanisms (e.g., two release mechanisms 1529 positioned on opposing sides of watch body 1520, such as spring-loaded buttons) for decoupling watch body 1520 from wearable band 1510. Release mechanism 1529 can include, without limitation, a button, a knob, a plunger, a handle, a lever, a fastener, a clasp, a dial, a latch, or a combination thereof.

A user can actuate release mechanism 1529 by pushing, turning, lifting, depressing, shifting, or performing other actions on release mechanism 1529. Actuation of release mechanism 1529 can release (e.g., decouple) watch body 1520 from coupling mechanism 1516 of wearable band 1510, allowing the user to use watch body 1520 independently from wearable band 1510 and vice versa. For example, decoupling watch body 1520 from wearable band 1510 can allow a user to capture images using rear-facing camera 1525b. Although release mechanism 1529 is shown positioned at a corner of watch body 1520, release mechanism 1529 can be positioned anywhere on watch body 1520 that is convenient for the user to actuate. In addition, in some examples, wearable band 1510 can also include a respective release mechanism for decoupling watch body 1520 from coupling mechanism 1516. In some examples, release mechanism 1529 is optional and watch body 1520 can be decoupled from coupling mechanism 1516 as described above (e.g., via twisting, rotating, etc.).

Watch body 1520 can include one or more peripheral buttons 1523 and 1527 for performing various operations at watch body 1520. For example, peripheral buttons 1523 and 1527 can be used to turn on or wake (e.g., transition from a sleep state to an active state) display 1505, unlock watch body 1520, increase or decrease a volume, increase or decrease a brightness, interact with one or more applications, interact with one or more user interfaces, etc. Additionally or alternatively, in some examples, display 1505 operates as a touch screen and allows the user to provide one or more inputs for interacting with watch body 1520.

In some examples, watch body 1520 includes one or more sensors 1521. Sensors 1521 of watch body 1520 can be the same or distinct from sensors 1513 of wearable band 1510. Sensors 1521 of watch body 1520 can be distributed on an inside and/or an outside surface of watch body 1520. In some examples, sensors 1521 are configured to contact a user's skin when watch body 1520 is worn by the user. For example, sensors 1521 can be placed on the bottom side of watch body 1520 and coupling mechanism 1516 can be a cradle with an opening that allows the bottom side of watch body 1520 to directly contact the user's skin. Alternatively, in some examples, watch body 1520 does not include sensors that are configured to contact the user's skin (e.g., including sensors internal and/or external to the watch body 1520 that are configured to sense data of watch body 1520 and the surrounding environment). In some examples, sensors 1521 are configured to track a position and/or motion of watch body 1520.

Watch body 1520 and wearable band 1510 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 1520 and wearable band 1510 can share data sensed by sensors 1513 and 1521, as well as application and device specific information (e.g., active and/or available applications, output devices (e.g., displays, speakers, etc.), input devices (e.g., touch screens, microphones, imaging sensors, etc.).

In some examples, watch body 1520 can include, without limitation, a front-facing camera 1525a and/or a rear-facing camera 1525b, sensors 1521 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 1663), a touch sensor, a sweat sensor, etc.). In some examples, watch body 1520 can include one or more haptic devices 1676 (e.g., a vibratory haptic actuator) that is configured to provide haptic feedback (e.g., a cutaneous and/or kinesthetic sensation, etc.) to the user. Sensors 1621 and/or haptic device 1676 can also be configured to operate in conjunction with multiple applications including, without limitation, health monitoring applications, social media applications, game applications, and artificial reality applications (e.g., the applications associated with artificial reality).

As described above, watch body 1520 and wearable band 1510, when coupled, can form wrist-wearable device 1500. When coupled, watch body 1520 and wearable band 1510 may operate as a single device to execute functions (operations, detections, communications, etc.) described herein. In some examples, each device may be provided with particular instructions for performing the one or more operations of wrist-wearable device 1500. For example, in accordance with a determination that watch body 1520 does not include neuromuscular signal sensors, wearable band 1510 can include alternative instructions for performing associated instructions (e.g., providing sensed neuromuscular signal data to watch body 1520 via a different electronic device). Operations of wrist-wearable device 1500 can be performed by watch body 1520 alone or in conjunction with wearable band 1510 (e.g., via respective processors and/or hardware components) and vice versa. In some examples, operations of wrist-wearable device 1500, watch body 1520, and/or wearable band 1510 can be performed in conjunction with one or more processors and/or hardware components.

As described below with reference to the block diagram of FIG. 16, wearable band 1510 and/or watch body 1520 can each include independent resources required to independently execute functions. For example, wearable band 1510 and/or watch body 1520 can each include a power source (e.g., a battery), a memory, data storage, a processor (e.g., a central processing unit (CPU)), communications, a light source, and/or input/output devices.

FIG. 16 shows block diagrams of a computing system 1630 corresponding to wearable band 1510 and a computing system 1660 corresponding to watch body 1520. Computing system 1600 of wrist-wearable device 1500 may include a combination of components of wearable band computing system 1630 and watch body computing system 1660.

Watch body 1520 and/orwearable band 1510 can include one or more components shown in watch body computing system 1660. In some examples, a single integrated circuit may include all or a substantial portion of the components of watch body computing system 1660 included in a single integrated circuit. Alternatively, in some examples, components of the watch body computing system 1660 may be included in a plurality of integrated circuits that are communicatively coupled. In some examples, watch body computing system 1660 may be configured to couple (e.g., via a wired or wireless connection) with wearable band computing system 1630, which may allow the computing systems to share components, distribute tasks, and/or perform other operations described herein (individually or as a single device).

Watch body computing system 1660 can include one or more processors 1679, a controller 1677, a peripherals interface 1661, a power system 1695, and memory (e.g., a memory 1680).

Power system 1695 can include a charger input 1696, a power-management integrated circuit (PMIC) 1697, and a battery 1698. In some examples, a watch body 1520 and a wearable band 1510 can have respective batteries (e.g., battery 1698 and 1659) and can share power with each other. Watch body 1520 and wearable band 1510 can receive a charge using a variety of techniques. In some examples, watch body 1520 and wearable band 1510 can use a wired charging assembly (e.g., power cords) to receive the charge. Alternatively, or in addition, watch body 1520 and/or wearable band 1510 can be configured for wireless charging. For example, a portable charging device can be designed to mate with a portion of watch body 1520 and/or wearable band 1510 and wirelessly deliver usable power to battery 1698 of watch body 1520 and/or battery 1659 of wearable band 1510. Watch body 1520 and wearable band 1510 can have independent power systems (e.g., power system 1695 and 1656, respectively) to enable each to operate independently. Watch body 1520 and wearable band 1510 can also share power (e.g., one can charge the other) via respective PMICs (e.g., PMICs 1697 and 1658) and charger inputs (e.g., 1657 and 1696) that can share power over power and ground conductors and/or over wireless charging antennas.

In some examples, peripherals interface 1661 can include one or more sensors 1621. Sensors 1621 can include one or more coupling sensors 1662 for detecting when watch body 1520 is coupled with another electronic device (e.g., a wearable band 1510). Sensors 1621 can include one or more imaging sensors 1663 (e.g., one or more of cameras 1625, and/or separate imaging sensors 1663 (e.g., thermal-imaging sensors)). In some examples, sensors 1621 can include one or more SpO2 sensors 1664. In some examples, sensors 1621 can include one or more biopotential-signal sensors (e.g., EMG sensors 1665, which may be disposed on an interior, user-facing portion of watch body 1520 and/or wearable band 1510). In some examples, sensors 1621 may include one or more capacitive sensors 1666. In some examples, sensors 1621 may include one or more heart rate sensors 1667. In some examples, sensors 1621 may include one or more IMU sensors 1668. In some examples, one or more IMU sensors 1668 can be configured to detect movement of a user's hand or other location where watch body 1520 is placed or held.

In some examples, one or more of sensors 1621 may provide an example human-machine interface. For example, a set of neuromuscular sensors, such as EMG sensors 1665, may be arranged circumferentially around wearable band 1510 with an interior surface of EMG sensors 1665 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 1510 can be used to generate control information for controlling an augmented reality system, a robot, controlling a vehicle, scrolling through text, controlling a virtual avatar, or any other suitable control task.

In some examples, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other examples, at least some signal processing of the output of the sensing components can be performed in software such as processors 1679. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 1665 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the examples described herein can also be implemented in wearable interfaces with other types of sensors including, but not limited to, mechanomyography (MMG) sensors, sonomyography (SMG) sensors, and electrical impedance tomography (EIT) sensors.

In some examples, peripherals interface 1661 includes a near-field communication (NFC) component 1669, a global-position system (GPS) component 1670, a long-term evolution (LTE) component 1671, and/or a Wi-Fi and/or Bluetooth communication component 1672. In some examples, peripherals interface 1661 includes one or more buttons 1673 (e.g., peripheral buttons 1523 and 1527 in FIG. 15), which, when selected by a user, cause operation to be performed at watch body 1520. In some examples, the peripherals interface 1661 includes one or more indicators, such as a light emitting diode (LED), to provide a user with visual indicators (e.g., message received, low battery, active microphone and/or camera, etc.).

Watch body 1520 can include at least one display 1505 for displaying visual representations of information or data to a user, including user-interface elements and/or three-dimensional virtual objects. The display can also include a touch screen for inputting user inputs, such as touch gestures, swipe gestures, and the like. Watch body 1520 can include at least one speaker 1674 and at least one microphone 1675 for providing audio signals to the user and receiving audio input from the user. The user can provide user inputs through microphone 1675 and can also receive audio output from speaker 1674 as part of a haptic event provided by haptic controller 1678. Watch body 1520 can include at least one camera 1625, including a front camera 1625a and a rear camera 1625b. Cameras 1625 can include ultra-wide-angle cameras, wide angle cameras, fish-eye cameras, spherical cameras, telephoto cameras, depth-sensing cameras, or other types of cameras.

Watch body computing system 1660 can include one or more haptic controllers 1678 and associated componentry (e.g., haptic devices 1676) for providing haptic events at watch body 1520 (e.g., a vibrating sensation or audio output in response to an event at the watch body 1520). Haptic controllers 1678 can communicate with one or more haptic devices 1676, such as electroacoustic devices, including a speaker of the one or more speakers 1674 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 1678 can provide haptic events to that are capable of being sensed by a user of watch body 1520. In some examples, one or more haptic controllers 1678 can receive input signals from an application of applications 1682.

In some examples, wearable band computing system 1630 and/or watch body computing system 1660 can include memory 1680, which can be controlled by one or more memory controllers of controllers 1677. In some examples, software components stored in memory 1680 include one or more applications 1682 configured to perform operations at the watch body 1520. In some examples, one or more applications 1682 may include games, word processors, messaging applications, calling applications, web browsers, social media applications, media streaming applications, financial applications, calendars, clocks, etc. In some examples, software components stored in memory 1680 include one or more communication interface modules 1683 as defined above. In some examples, software components stored in memory 1680 include one or more graphics modules 1684 for rendering, encoding, and/or decoding audio and/or visual data and one or more data management modules 1685 for collecting, organizing, and/or providing access to data 1687 stored in memory 1680. In some examples, one or more of applications 1682 and/or one or more modules can work in conjunction with one another to perform various tasks at the watch body 1520.

In some examples, software components stored in memory 1680 can include one or more operating systems 1681 (e.g., a Linux-based operating system, an Android operating system, etc.). Memory 1680 can also include data 1687. Data 1687 can include profile data 1688A, sensor data 1689A, media content data 1690, and application data 1691.

It should be appreciated that watch body computing system 1660 is an example of a computing system within watch body 1520, and that watch body 1520 can have more or fewer components than shown in watch body computing system 1660, can combine two or more components, and/or can have a different configuration and/or arrangement of the components. The various components shown in watch body computing system 1660 are implemented in hardware, software, firmware, or a combination thereof, including one or more signal processing and/or application-specific integrated circuits.

Turning to the wearable band computing system 1630, one or more components that can be included in wearable band 1510 are shown. Wearable band computing system 1630 can include more or fewer components than shown in watch body computing system 1660, can combine two or more components, and/or can have a different configuration and/or arrangement of some or all of the components. In some examples, all, or a substantial portion of the components of wearable band computing system 1630 are included in a single integrated circuit. Alternatively, in some examples, components of wearable band computing system 1630 are included in a plurality of integrated circuits that are communicatively coupled. As described above, in some examples, wearable band computing system 1630 is configured to couple (e.g., via a wired or wireless connection) with watch body computing system 1660, which allows the computing systems to share components, distribute tasks, and/or perform other operations described herein (individually or as a single device).

Wearable band computing system 1630, similar to watch body computing system 1660, can include one or more processors 1649, one or more controllers 1647 (including one or more haptics controllers 1648), a peripherals interface 1631 that can includes one or more sensors 1613 and other peripheral devices, a power source (e.g., a power system 1656), and memory (e.g., a memory 1650) that includes an operating system (e.g., an operating system 1651), data (e.g., data 1654 including profile data 1688B, sensor data 1689B, etc.), and one or more modules (e.g., a communications interface module 1652, a data management module 1653, etc.).

One or more of sensors 1613 can be analogous to sensors 1621 of watch body computing system 1660. For example, sensors 1613 can include one or more coupling sensors 1632, one or more SpO2 sensors 1634, one or more EMG sensors 1635, one or more capacitive sensors 1636, one or more heart rate sensors 1637, and one or more IMU sensors 1638.

Peripherals interface 1631 can also include other components analogous to those included in peripherals interface 1661 of watch body computing system 1660, including an NFC component 1639, a GPS component 1640, an LTE component 1641, a Wi-Fi and/or Bluetooth communication component 1642, and/or one or more haptic devices 1646 as described above in reference to peripherals interface 1661. In some examples, peripherals interface 1631 includes one or more buttons 1643, a display 1633, a speaker 1644, a microphone 1645, and a camera 1655. In some examples, peripherals interface 1631 includes one or more indicators, such as an LED.

It should be appreciated that wearable band computing system 1630 is an example of a computing system within wearable band 1510, and that wearable band 1510 can have more or fewer components than shown in wearable band computing system 1630, combine two or more components, and/or have a different configuration and/or arrangement of the components. The various components shown in wearable band computing system 1630 can be implemented in one or more of a combination of hardware, software, or firmware, including one or more signal processing and/or application-specific integrated circuits.

Wrist-wearable device 1500 with respect to FIG. 15 is an example of wearable band 1510 and watch body 1520 coupled together, so wrist-wearable device 1500 will be understood to include the components shown and described for wearable band computing system 1630 and watch body computing system 1660. In some examples, wrist-wearable device 1500 has a split architecture (e.g., a split mechanical architecture, a split electrical architecture, etc.) between watch body 1520 and wearable band 1510. In other words, all of the components shown in wearable band computing system 1630 and watch body computing system 1660 can be housed or otherwise disposed in a combined wrist-wearable device 1500 or within individual components of watch body 1520, wearable band 1510, and/or portions thereof (e.g., a coupling mechanism 1516 of wearable band 1510).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some examples, wrist-wearable device 1500 can be used in conjunction with a head-wearable device (e.g., AR glasses 1700 and VR system 1810) and/or an HIPD, and wrist-wearable device 1500 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR glasses 1700 and VR headset 1810.

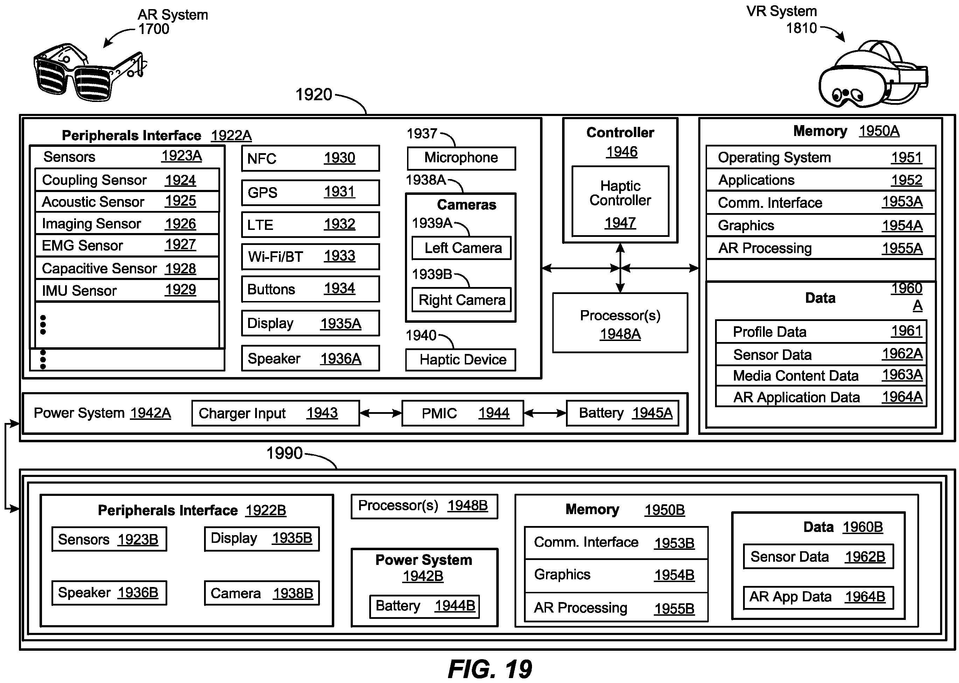

FIGS. 17 to 19 show example artificial-reality systems, which can be used as or in connection with wrist-wearable device 1500. In some examples, AR system 1700 includes an eyewear device 1702, as shown in FIG. 17. In some examples, VR system 1810 includes a head-mounted display (HMD) 1812, as shown in FIGS. 18A and 18B. In some examples, AR system 1700 and VR system 1810 can include one or more analogous components (e.g., components for presenting interactive artificial-reality environments, such as processors, memory, and/or presentation devices, including one or more displays and/or one or more waveguides), some of which are described in more detail with respect to FIG. 19. As described herein, a head-wearable device can include components of eyewear device 1702 and/or head-mounted display 1812. Some examples of head-wearable devices do not include any displays, including any of the displays described with respect to AR system 1700 and/or VR system 1810. While the example artificial-reality systems are respectively described herein as AR system 1700 and VR system 1810, either or both of the example AR systems described herein can be configured to present fully-immersive virtual-reality scenes presented in substantially all of a user's field of view or subtler augmented-reality scenes that are presented within a portion, less than all, of the user's field of view.

FIG. 17 show an example visual depiction of AR system 1700, including an eyewear device 1702 (which may also be described herein as augmented-reality glasses, and/or smart glasses). AR system 1700 can include additional electronic components that are not shown in FIG. 17, such as a wearable accessory device and/or an intermediary processing device, in electronic communication or otherwise configured to be used in conjunction with the eyewear device 1702. In some examples, the wearable accessory device and/or the intermediary processing device may be configured to couple with eyewear device 1702 via a coupling mechanism in electronic communication with a coupling sensor 1924 (FIG. 19), where coupling sensor 1924 can detect when an electronic device becomes physically or electronically coupled with eyewear device 1702. In some examples, eyewear device 1702 can be configured to couple to a housing 1990 (FIG. 19), which may include one or more additional coupling mechanisms configured to couple with additional accessory devices. The components shown in FIG. 17 can be implemented in hardware, software, firmware, or a combination thereof, including one or more signal-processing components and/or application-specific integrated circuits (ASICs).

Eyewear device 1702 includes mechanical glasses components, including a frame 1704 configured to hold one or more lenses (e.g., one or both lenses 1706-1 and 1706-2). One of ordinary skill in the art will appreciate that eyewear device 1702 can include additional mechanical components, such as hinges configured to allow portions of frame 1704 of eyewear device 1702 to be folded and unfolded, a bridge configured to span the gap between lenses 1706-1 and 1706-2 and rest on the user's nose, nose pads configured to rest on the bridge of the nose and provide support for eyewear device 1702, earpieces configured to rest on the user's ears and provide additional support for eyewear device 1702, temple arms configured to extend from the hinges to the earpieces of eyewear device 1702, and the like. One of ordinary skill in the art will further appreciate that some examples of AR system 1700 can include none of the mechanical components described herein. For example, smart contact lenses configured to present artificial reality to users may not include any components of eyewear device 1702.

Eyewear device 1702 includes electronic components, many of which will be described in more detail below with respect to FIG. 19. Some example electronic components are illustrated in FIG. 17, including acoustic sensors 1725-1, 1725-2, 1725-3, 1725-4, 1725-5, and 1725-6, which can be distributed along a substantial portion of the frame 1704 of eyewear device 1702. Eyewear device 1702 also includes a left camera 1739A and a right camera 1739B, which are located on different sides of the frame 1704. Eyewear device 1702 also includes a processor 1748 (or any other suitable type or form of integrated circuit) that is embedded into a portion of the frame 1704.

FIGS. 18A and 18B show a VR system 1810 that includes a head-mounted display (HMD) 1812 (e.g., also referred to herein as an artificial-reality headset, a head-wearable device, a VR headset, etc.). As noted, some artificial-reality systems (e.g., AR system 1700) may, instead of blending an artificial reality with actual reality, substantially replace one or more of a user's visual and/or other sensory perceptions of the real world with a virtual experience (e.g., AR systems 1300 and 1400).

HMD 1812 includes a front body 1814 and a frame 1816 (e.g., a strap or band) shaped to fit around a user's head. In some examples, front body 1814 and/or frame 1816 include one or more electronic elements for facilitating presentation of and/or interactions with an AR and/or VR system (e.g., displays, IMUs, tracking emitter or detectors). In some examples, HMD 1812 includes output audio transducers (e.g., an audio transducer 1818), as shown in FIG. 18B. In some examples, one or more components, such as the output audio transducer(s) 1818 and frame 1816, can be configured to attach and detach (e.g., are detachably attachable) to HMD 1812 (e.g., a portion or all of frame 1816, and/or audio transducer 1818), as shown in FIG. 18B. In some examples, coupling a detachable component to HMD 1812 causes the detachable component to come into electronic communication with HMD 1812.

FIGS. 18A and 18B also show that VR system 1810 includes one or more cameras, such as left camera 1839A and right camera 1839B, which can be analogous to left and right cameras 1739A and 1739B on frame 1704 of eyewear device 1702. In some examples, VR system 1810 includes one or more additional cameras (e.g., cameras 1839C and 1839D), which can be configured to augment image data obtained by left and right cameras 1839A and 1839B by providing more information. For example, camera 1839C can be used to supply color information that is not discerned by cameras 1839A and 1839B. In some examples, one or more of cameras 1839A to 1839D can include an optional IR cut filter configured to remove IR light from being received at the respective camera sensors.

FIG. 19 illustrates a computing system 1920 and an optional housing 1990, each of which show components that can be included in AR system 1700 and/or VR system 1810. In some examples, more or fewer components can be included in optional housing 1990 depending on practical restraints of the respective AR system being described.

In some examples, computing system 1920 can include one or more peripherals interfaces 1922A and/or optional housing 1990 can include one or more peripherals interfaces 1922B. Each of computing system 1920 and optional housing 1990 can also include one or more power systems 1942A and 1942B, one or more controllers 1946 (including one or more haptic controllers 1947), one or more processors 1948A and 1948B (as defined above, including any of the examples provided), and memory 1950A and 1950B, which can all be in electronic communication with each other. For example, the one or more processors 1948A and 1948B can be configured to execute instructions stored in memory 1950A and 1950B, which can cause a controller of one or more of controllers 1946 to cause operations to be performed at one or more peripheral devices connected to peripherals interface 1922A and/or 1922B. In some examples, each operation described can be powered by electrical power provided by power system 1942A and/or 1942B.

In some examples, peripherals interface 1922A can include one or more devices configured to be part of computing system 1920, some of which have been defined above and/or described with respect to the wrist-wearable devices shown in FIGS. 15 and 16. For example, peripherals interface 1922A can include one or more sensors 1923A. Some example sensors 1923A include one or more coupling sensors 1924, one or more acoustic sensors 1925, one or more imaging sensors 1926, one or more EMG sensors 1927, one or more capacitive sensors 1928, one or more IMU sensors 1929, and/or any other types of sensors explained above or described with respect to any other examples discussed herein.

In some examples, peripherals interfaces 1922A and 1922B can include one or more additional peripheral devices, including one or more NFC devices 1930, one or more GPS devices 1931, one or more LTE devices 1932, one or more Wi-Fi and/or Bluetooth devices 1933, one or more buttons 1934 (e.g., including buttons that are slidable or otherwise adjustable), one or more displays 1935A and 1935B, one or more speakers 1936A and 1936B, one or more microphones 1937, one or more cameras 1938A and 1938B (e.g., including the left camera 1939A and/or a right camera 1939B), one or more haptic devices 1940, and/or any other types of peripheral devices defined above or described with respect to any other examples discussed herein.

AR systems can include a variety of types of visual feedback mechanisms (e.g., presentation devices). For example, display devices in AR system 1700 and/or VR system 1810 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some examples of AR systems also include optical subsystems having one or more lenses (e.g., conventional concave or convex lenses, Fresnel lenses, or adjustable liquid lenses) through which a user can view a display screen.

For example, respective displays 1935A and 1935B can be coupled to each of the lenses 1706-1 and 1706-2 of AR system 1700. Displays 1935A and 1935B may be coupled to each of lenses 1706-1 and 1706-2, which can act together or independently to present an image or series of images to a user. In some examples, AR system 1700 includes a single display 1935A or 1935B (e.g., a near-eye display) or more than two displays 1935A and 1935B. In some examples, a first set of one or more displays 1935A and 1935B can be used to present an augmented-reality environment, and a second set of one or more display devices 1935A and 1935B can be used to present a virtual-reality environment. In some examples, one or more waveguides are used in conjunction with presenting artificial-reality content to the user of AR system 1700 (e.g., as a means of delivering light from one or more displays 1935A and 1935B to the user's eyes). In some examples, one or more waveguides are fully or partially integrated into the eyewear device 1702. Additionally, or alternatively to display screens, some artificial-reality systems include one or more projection systems. For example, display devices in AR system 1700 and/or VR system 1810 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some examples, one or more waveguides are provided additionally or alternatively to the one or more display(s) 1935A and 1935B.

Computing system 1920 and/or optional housing 1990 of AR system 1700 or VR system 1810 can include some or all of the components of a power system 1942A and 1942B. Power systems 1942A and 1942B can include one or more charger inputs 1943, one or more PMICs 1944, and/or one or more batteries 1945A and 1944B.

Memory 1950A and 1950B may include instructions and data, some or all of which may be stored as non-transitory computer-readable storage media within the memories 1950A and 1950B. For example, memory 1950A and 1950B can include one or more operating systems 1951, one or more applications 1952, one or more communication interface applications 1953A and 1953B, one or more graphics applications 1954A and 1954B, one or more AR processing applications 1955A and 1955B, and/or any other types of data defined above or described with respect to any other examples discussed herein.

Memory 1950A and 1950B also include data 1960A and 1960B, which can be used in conjunction with one or more of the applications discussed above. Data 1960A and 1960B can include profile data 1961, sensor data 1962A and 1962B, media content data 1963A, AR application data 1964A and 1964B, and/or any other types of data defined above or described with respect to any other examples discussed herein.

In some examples, controller 1946 of eyewear device 1702 may process information generated by sensors 1923A and/or 1923B on eyewear device 1702 and/or another electronic device within AR system 1700. For example, controller 1946 can process information from acoustic sensors 1725-1 and 1725-2. For each detected sound, controller 1946 can perform a direction of arrival (DOA) estimation to estimate a direction from which the detected sound arrived at eyewear device 1702 of AR system 1700. As one or more of acoustic sensors 1925 (e.g., the acoustic sensors 1725-1, 1725-2) detects sounds, controller 1946 can populate an audio data set with the information (e.g., represented in FIG. 19 as sensor data 1962A and 1962B).

In some examples, a physical electronic connector can convey information between eyewear device 1702 and another electronic device and/or between one or more processors 1748, 1948A, 1948B of AR system 1700 or VR system 1810 and controller 1946. The information can be in the form of optical data, electrical data, wireless data, or any other transmittable data form. Moving the processing of information generated by eyewear device 1702 to an intermediary processing device can reduce weight and heat in the eyewear device, making it more comfortable and safer for a user. In some examples, an optional wearable accessory device (e.g., an electronic neckband) is coupled to eyewear device 1702 via one or more connectors. The connectors can be wired or wireless connectors and can include electrical and/or non-electrical (e.g., structural) components. In some examples, eyewear device 1702 and the wearable accessory device can operate independently without any wired or wireless connection between them.

In some situations, pairing external devices, such as an intermediary processing device (e.g., HIPD 1106, 1206, 1306) with eyewear device 1702 (e.g., as part of AR system 1700) enables eyewear device 1702 to achieve a similar form factor of a pair of glasses while still providing sufficient battery and computation power for expanded capabilities. Some, or all, of the battery power, computational resources, and/or additional features of AR system 1700 can be provided by a paired device or shared between a paired device and eyewear device 1702, thus reducing the weight, heat profile, and form factor of eyewear device 1702 overall while allowing eyewear device 1702 to retain its desired functionality. For example, the wearable accessory device can allow components that would otherwise be included on eyewear device 1702 to be included in the wearable accessory device and/or intermediary processing device, thereby shifting a weight load from the user's head and neck to one or more other portions of the user's body. In some examples, the intermediary processing device has a larger surface area over which to diffuse and disperse heat to the ambient environment. Thus, the intermediary processing device can allow for greater battery and computation capacity than might otherwise have been possible on eyewear device 1702 standing alone. Because weight carried in the wearable accessory device can be less invasive to a user than weight carried in the eyewear device 1702, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 1700 and/or VR system 1810 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some examples, the methods described herein are used to map the real world, to provide a user with context about real-world surroundings, and/or to generate digital twins (e.g., interactable virtual objects), among a variety of other functions. For example, FIGS. 18A and 18B show VR system 1810 having cameras 1839A to 1839D, which can be used to provide depth information for creating a voxel field and a two-dimensional mesh to provide object information to the user to avoid collisions.

In some examples, AR system 1700 and/or VR system 1810 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some examples of an artificial reality system, such as AR system 1700 and/or VR system 1810, ambient light (e.g., a live feed of the surrounding environment that a user would normally see) can be passed through a display element of a respective head-wearable device presenting aspects of the AR system. In some examples, ambient light can be passed through a portion less that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

The preceding description has been provided to enable others skilled in the art to best utilize various aspects of the examples disclosed herein. This example description is not intended to be exhaustive or to be limited to any precise form disclosed. Many modifications and variations are possible without departing from the scope of the present disclosure. The examples disclosed herein should be considered in all respects illustrative and not restrictive. Reference should be made to any claims appended hereto and their equivalents in determining the scope of the present disclosure.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

## Claims

1. An artificial-reality device, comprising:
a left eyecup for viewing a left image through the left eyecup;
a right eyecup for viewing a right image through the right eyecup;
a flexible shroud membrane connected to the left eyecup and the right eyecup;
an interpupillary distance adjustment mechanism for adjusting a distance between the left eyecup and the right eyecup; and
a force-offsetting mechanism configured to augment a force applied to adjust the distance between the left eyecup and the right eyecup.

2. The artificial-reality device of claim 1, wherein the force-offsetting mechanism comprises at least one cam mechanism comprising a spring-loaded roller positioned to interact with a cam surface as the distance between the left eyecup and the right eyecup is adjusted.

3. The artificial-reality device of claim 2, wherein the at least one cam mechanism comprises:
a first cam mechanism comprising a first spring-loaded roller positioned to interact with a first cam surface; and
a second cam mechanism comprising a second spring-loaded roller positioned to interact with a second cam surface.

4. The artificial-reality device of claim 3, wherein the first cam surface comprises a first surface of the left eyecup and the second cam surface comprises a second surface of the right eyecup.

5. The artificial-reality device of any preceding claim, wherein the force-offsetting mechanism comprises at least one bistable spring mechanism positioned and configured to augment the force applied to adjust the distance between the left eyecup and the right eyecup.

6. The artificial-reality device of claim 5, wherein the at least one bistable spring mechanism is configured to be in a first stable state applying an inward force to the left eyecup and to the right eyecup when the distance between the left eyecup and the right eyecup approaches a minimum and in a second stable state applying an outward force to the left eyecup and to the right eyecup when the distance between the left eyecup and the right eyecup approaches a maximum.

7. The artificial-reality device of any preceding claim, wherein the force-offsetting mechanism comprises:
at least one left eyecup magnet coupled to the left eyecup; and
at least one right eyecup magnet coupled to the right eyecup,
wherein the at least one left eyecup magnet and the at least one right eyecup magnet are positioned and oriented to apply a magnetic force to augment the force applied to adjust the distance between the left eyecup and the right eyecup.

8. The artificial-reality device of claim 7, wherein:
the at least one left eyecup magnet comprises:
a first, outer left eyecup magnet positioned and oriented to apply a first magnetic force to augment a force applied to widen the distance between the left eyecup and the right eyecup; and
a second, inner left eyecup magnet positioned and oriented to apply a second magnetic force to augment a force applied to reduce the distance between the left eyecup and the right eyecup; and
the at least one right eyecup magnet comprises:
a first, outer right eyecup magnet positioned and oriented to apply a third magnetic force to augment the force applied to widen the distance between the left eyecup and the right eyecup; and
a second, inner right eyecup magnet positioned and oriented to apply a fourth magnetic force to augment the force applied to reduce the distance between the left eyecup and the right eyecup.

9. The artificial-reality device of claim 7 or 8, further comprising at least one frame magnet positioned on a frame supporting the left eyecup and the right eyecup, the at least one frame magnet being positioned and oriented to interact with at least one of the left eyecup magnet or the right eyecup magnet to apply the magnetic force to augment the force applied to adjust the distance between the left eyecup and the right eyecup.

10. The artificial-reality device of any preceding claim, wherein the force-offsetting mechanism comprises:
at least one motor; and
at least one encoder, wherein the motor is configured to activate to augment the force applied to adjust the distance between the left eyecup and the right eyecup in response to the at least one encoder identifying a position and direction of movement of the left eyecup and right eyecup.

11. The artificial-reality device of any preceding claim, wherein the force-offsetting mechanism comprises:
at least one frictional force augmentation element positioned and configured to augment the force applied to adjust the distance between the left eyecup and the right eyecup.

12. The artificial-reality device of claim 11, wherein the at least one frictional force augmentation element comprises:
at least one first shaft coupled to the left eyecup;
at least one second shaft coupled to the right eyecup;
a first friction element positioned and configured to engage with the first shaft; and
a second friction element positioned and configured to engage with the second shaft;
preferably wherein each of the first friction element and the second friction element comprises a rubber pad or an O-ring.

13. An artificial-reality device, comprising:
a head-mounted display (HMD) frame;
eyecups supported by the HMD frame for viewing images through the eyecups, the eyecups being laterally movable relative to each other and relative to the HMD frame for adjusting an interpupillary distance (IPD) setting of the eyecups;
a flexible shroud membrane mounted to and between the eyecups and the HMD frame, wherein the flexible shroud membrane applies a membrane force to the eyecups when the eyecups are in at least some IPD settings; and
a force-offsetting mechanism configured to counteract the membrane force to facilitate adjustments of the IPD setting of the eyecups.

14. The artificial-reality device of claim 13, wherein the force-offsetting mechanism comprises:
for each of the eyecups, at least one magnetic force augmentation element that applies a magnetic force to the eyecup as the eyecup approaches at least one of a maximum IPD setting or a minimum IPD setting;
a cam force augmentation mechanism including a spring-loaded roller abutting a cam surface, wherein the cam force augmentation mechanism applies an inward force to the eyecups when the eyecups approach a minimum IPD setting and an outward force to the eyecups when the eyecups approach a maximum IPD setting;
a bistable spring force augmentation mechanism including a bistable element that, in a first stable state when the eyecups approach a minimum IPD setting, applies an inward force to the eyecups and, in a second stable state when the eyecups approach a maximum IPD setting, applies an outward force to the eyecups;
a motorized force augmentation mechanism including an electromagnetic device configured to apply an inward force to the eyecups when the eyecups approach a minimum IPD setting and an outward force to the eyecups when the eyecups approach a maximum IPD setting; and/or
frictional force augmentation elements including friction elements that apply a frictional force to the eyecups to maintain the eyecups in a lateral position by overcoming the membrane force.

15. The artificial-reality device of claim 13 or 14, further comprising an encoder configured to detect a position of at least one of the eyecups.
